# EUROPEAN PATENT APPLICATION

(11) **EP 4 116 833 A1**
(43) Date of publication of application: **11.01.2023**
(21) Application number: 20927795.3
(22) Date of filing: 25.03.2020
(51) Int. Cl.: G06F 13/40, H04L 12/24

(54) **COMMUNICATION METHOD AND RELATED APPARATUS**

(71) Applicant: Huawei Technologies Co., Ltd., Shenzhen, Guangdong 518129, (CN)
(72) Inventor: LI, Chao, Shenzhen, Guangdong 518129, (CN); WANG, Xuehuan, Shenzhen, Guangdong 518129, (CN); BAO, Pengxin, Shenzhen, Guangdong 518129, (CN); ZHANG, Xingxin, Shenzhen, Guangdong 518129, (CN)
(74) Representative: Pfenning, Meinig & Partner mbB
(86) International application number: PCT/CN2020/081229
(87) International publication number: WO 2021/189332

(57) **Abstract**

Embodiments of this application provide a communications method and a related apparatus, applied to a peripheral component interconnect express PCIe-based communications system. The communications system includes a first processor and a plurality of switches, the plurality of switches include a first switch and a second switch, a first link exists between the first processor and the first switch, a second link exists between the first switch and the second switch, and a first standby link is configured between the first processor and the second switch. The method includes: if the first link and the second link are not faulty, communicating, by the first processor, with the second switch through the first link and the second link; or if the first link or the second link is faulty, activating the first standby link, and communicating, by the first processor, with the second switch through the activated first standby link. According to the embodiments provided in this application, stability of the communications system can be improved.

## Description

### TECHNICAL FIELD

This application relates to the field of communications technologies, and in particular, to a PCIe-based communications system, and specifically, to a communications method and a related apparatus.

### BACKGROUND

Development of communications technologies has made a huge contribution to the progress of society. In most fields of finance, science, education, and entertainment, electronic technologies such as digital computers, audio devices, and video devices are used to analyze and transmit data, improve decision-making efficiency, and reduce cost. These communication processes often require information and data transmission between components, and an information transmission manner affects stability of the communication process.

Peripheral component interconnect express (peripheral component interconnect express, PCIe) is a bus and interface standard, and a PCIe bus is one of buses most widely used when a processor (processing unit, PU) connects to a peripheral device. A PCIe bus-based system includes at least one processor, at least one switch, and at least one endpoint (endpoint) device (for example, an audio device or a video device). A processor, and a PCIe switch and an endpoint device that are managed by the processor can be named a processor system. The processor may communicate, through a root complex (root complex, RC), with the PCIe switch and the endpoint device connected to the switch in the processor system.

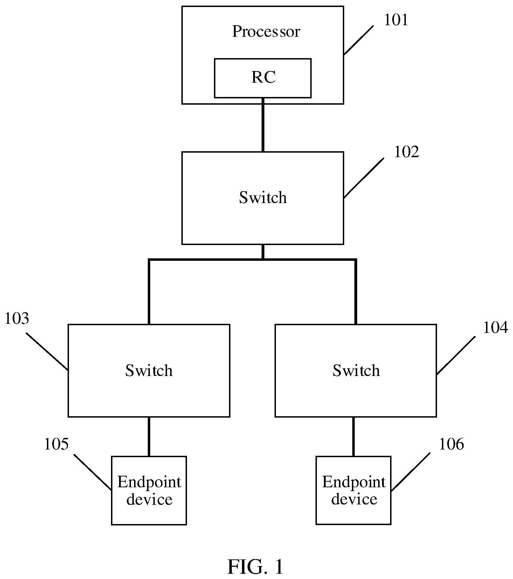

As referred in FIG. 1, FIG. 1 is a schematic architectural diagram of a PCIe-based communications system in the conventional technology. In the architecture, a processor 101, a switch 102, a switch 103, a switch 104, an endpoint device 105, and an endpoint device 106 are connected through a PCIe bus, and belong to one processor system. The switch includes a plurality of ports, and a physical connection between a port of the switch and a device is usually referred to as a link. The processor 101 may communicate with the switch 102 through a link between an RC and the switch 102, and may communicate with the switch 103 through a link between the switch 102 and the switch 103, to further communicate with the endpoint device 105. However, PCIe-connected switches and nodes only support a tree topology connection, and therefore cannot provide redundancy for an operation of the system. As shown in FIG. 1, when the link between the switch 102 and the switch 103 in the figure is faulty, the switch 103 and the endpoint device 105 cannot work, making the system unstable during operation, and unable to meet user's requirement for system stability and reliability, and serious consequences may be further caused. For example, for an in-vehicle communications network, such a situation may cause unstable vehicle running and endanger personal safety of a driver and a passenger.

### SUMMARY

Embodiments of this application disclose a communications method and a related apparatus, to improve stability of a communications system.

According to a first aspect, embodiments of this application disclose a communications method, applied to a peripheral component interconnect express PCIe-based communications system. The communications system includes a first processor and a plurality of switches, the plurality of switches include a first switch and a second switch, a first link exists between the first processor and the first switch, a second link exists between the first switch and the second switch, and a first standby link is configured between the first processor and the second switch. The communications method includes:
If the first link and the second link are not faulty, the first processor communicates with the second switch through the first link and the second link; or
if the first link or the second link is faulty, the first standby link is activated, and the first processor communicates with the second switch through the activated first standby link.

In the foregoing method, the first standby link is preconfigured between the first processor and the second switch, and when a link for communication between the first processor and the second switch is faulty, the first standby link is activated, so that the first processor can communicate with the second switch through the activated first standby link. Therefore, a redundant link is provided for the second switch, to avoid a problem that the second switch cannot continue to work due to a link fault, and improve stability of the communications system.

In another possible implementation of the first aspect, the communications system further includes a third switch, and that a first standby link is configured between the first processor and the second switch is specifically:
a third link exists between the first processor and the third switch, and a second standby link is configured between the third switch and the second switch; and
that the first processor communicates with the second switch through the activated first standby link includes:
   the first processor communicates with the second switch through the third link and the activated second standby link.

In the foregoing method, the second standby link is configured between the second switch and the third switch. Compared with directly configuring the first standby link between the second switch and the first processor, the foregoing method reduces port consumption of the first processor. Further, the second standby link between the second switch and the third switch may not only provide a redundant link for the second switch, but also provide a redundant link for the third switch, to ensure stable working of more switches, and reduce costs of deploying a standby link.

In another possible implementation of the first aspect, the method further includes:

The first processor sends first activation indication information to the third switch, where the first activation indication information is used by the third switch to activate the second standby link; and/or
the third switch receives the first activation indication information from the first processor; and
the third switch activates the second standby link according to the first activation indication information.

In another possible implementation of the first aspect, that the first standby link is activated includes:

The second switch sends second activation indication information to the third switch, where the second activation indication information is used by the third switch to activate the second standby link;
the third switch receives first activation indication information from the first processor; and
the third switch activates the second standby link according to the second activation indication information.

In another possible implementation of the first aspect, before the first standby link is activated, the method further includes:
determining the first standby link based on information about the first standby link, where the information about the first standby link includes at least one of a priority of the first standby link, a latency of the first standby link, and a hop count from the second switch to the first processor through the first standby link.

In the foregoing method, the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation of the first aspect, the first standby link is a link with a highest priority, a link with a shortest latency, or a link with a smallest hop count from the second switch to the first processor.

In another possible implementation of the first aspect, the communications system further includes a second processor, a fourth link exists between the second processor and the second switch, and a fifth link exists between the second processor and the third switch. The method further includes:
If the fourth link is not faulty, the second processor communicates with the second switch through the fourth link; or
if the fourth link is faulty, the second processor communicates with the second switch through the fifth link and the activated second standby link.

In the foregoing method, the second processor may provide standby computing resources for the first processor, to improve stability of the communications system. Alternatively, the second processor may provide distributed computing resources for the first processor, to reduce computing pressure of the first processor. When a link for communication with the second switch is faulty, the second processor may communicate with the second switch through the second standby link, to improve stability of the communications system.

In another possible implementation of the first aspect, the communications system includes a first control domain and a second control domain; the first control domain includes the first processor, the first switch, the second switch, and the third switch; the second control domain includes the second processor; a first non-transparent bridge link is configured between the first control domain and the second control domain; and the first non-transparent bridge link is used by the second processor to access the first control domain.

In another possible implementation of the first aspect, the method further includes:

The first processor allocates at least one of a bus number, a device number, and a function number to the second switch; and/or
a first address mapping relationship exists between the second processor and the first non-transparent bridge link, where the first address mapping relationship is used by the second processor to communicate with the second switch.

In another possible implementation of the first aspect, the communications system includes a first control domain and a second control domain; the first control domain includes the apparatus, the first processor, the first switch, and the second switch; the second control domain includes the second processor and the third switch; and a second non-transparent bridge link is configured between the first control domain and the second control domain.

In another possible implementation of the first aspect, the method further includes:

A second address mapping relationship exists between the first processor and the second non-transparent bridge link, where the second address mapping relationship is used by the first processor to communicate with the second switch; and/or
the second processor allocates at least one of a bus number, a device number, and a function number to the second switch.

In another possible implementation of the first aspect, the third switch is a switch that is in the plurality of switches and that is separated from the second switch by a hop count greater than or equal to a first threshold, or is a switch that is in the plurality of switches and that is separated from the first processor by a hop count greater than or equal to a second threshold.

In the foregoing method, during configuration of the standby link, a switch that is separated from the second switch by a hop count greater than or equal to the first threshold is selected as the third switch, so that the standby link can connect switches as many as possible, and redundancy is provided for more switches while ensuring that the second switch has the standby link. If a switch that is separated from the first processor by a hop count greater than or equal to the second threshold is selected, more switches may be ensured during link configuration, so that a quantity of standby links is as small as possible, hardware consumption is reduced, and costs are reduced.

According to a second aspect, embodiments of this application disclose a communications method, applied to a peripheral component interconnect express PCIe-based communications system. The communications system includes a first processor and a plurality of switches, the plurality of switches include a first switch and a second switch, a first link exists between the first processor and the first switch, a second link exists between the first switch and the second switch, and a first standby link is configured between the first processor and the second switch.

The method includes:
If the first link and the second link are not faulty, the second switch communicates with the first processor through the first link and the second link; or
if the first link or the second link is faulty, the second switch activates the first standby link, and communicates with the first processor through the activated first standby link.

In the foregoing method, the first standby link is preconfigured between the first processor and the second switch, and when a link for communication between the first processor and the second switch is faulty, the first standby link is activated, so that the first processor can communicate with the second switch through the activated first standby link. Therefore, a redundant link is provided for the second switch, to avoid a problem that the second switch cannot continue to work due to a link fault, and improve stability of the communications system.

In a possible implementation of the second aspect, the communications system further includes a third switch, and that a first standby link is configured between the first processor and the second switch is specifically:

A third link exists between the first processor and the third switch, and a second standby link is configured between the second switch and the third switch; and
that the second switch communicates with the first processor through the activated first standby link includes:
the second switch communicates with the first processor through the third link and the activated second standby link.

In the foregoing method, the second standby link is configured between the second switch and the third switch. Compared with directly configuring the standby link between the second switch and the first processor, the foregoing method reduces port consumption of the first processor. Further, the second standby link between the second switch and the third switch may not only provide a redundant link for the second switch, but also provide a redundant link for the third switch, to ensure stable working of more switches, and reduce costs of deploying a standby link.

In another possible implementation of the second aspect, that the second switch activates a first standby link includes:
The second switch sends second activation indication information to the third switch, where the second activation indication information is used by the third switch to activate the second standby link.

In another possible implementation of the second aspect, before the second switch activates the first standby link, the method further includes:
The second switch determines the first standby link based on information about the first standby link, where the information about the first standby link includes at least one of a priority of the first standby link, a latency of the first standby link, and a hop count from the second switch to the first processor through the first standby link.

In the foregoing method, the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation of the second aspect, the first standby link is a link with a highest priority, a link with a shortest latency, or a link with a smallest hop count from the second switch to the first processor.

In another possible implementation of the second aspect, the communications system further includes a second processor, a fourth link exists between the second switch and the second processor, and a fifth link exists between the second processor and the third switch, and the method further includes:
If the fourth link is not faulty, the second switch communicates with the second processor through the fourth link; or
if the fourth link is faulty, the second switch communicates with the second processor through the fifth link and the activated second standby link.

In another possible implementation of the second aspect, the communications system includes a first control domain and a second control domain; the first control domain includes the first processor, the first switch, the second switch, and the third switch; the second control domain includes the second processor; a first non-transparent bridge link is configured between the first control domain and the second control domain; and the first non-transparent bridge link is used by the second processor to access the first control domain.

In another possible implementation of the second aspect, the method further includes:
The second switch receives at least one of a bus number, a device number, and a function number from the first processor.

In another possible implementation of the second aspect, the communications system includes a first control domain and a second control domain; the first control domain includes the apparatus, the first processor, the first switch, and the second switch; the second control domain includes the second processor and the third switch; a second non-transparent bridge link is configured between the first control domain and the second control domain; and the second non-transparent bridge link is used by the first processor to access the second control domain.

In another possible implementation of the second aspect, the method further includes:
The second switch receives at least one of a bus number, a device number, and a function number from the second processor.

According to a third aspect, embodiments of this application disclose an apparatus. The apparatus is a processor in a peripheral component interconnect express PCIe-based communications system. The communications system further includes a plurality of switches, the plurality of switches include a first switch and a second switch, a first link exists between the first processor and the first switch, a second link exists between the first switch and the second switch, and a first standby link is configured between the apparatus and the second switch. The apparatus includes:
a first communications unit, configured to: if the first link and the second link are not faulty, communicate with the second switch through the first link and the second link; and
a second communications unit, configured to: if the first link or the second link is faulty, activate the first standby link, and communicate with the second switch through the activated first standby link.

It can be learned that the first standby link is preconfigured between the apparatus and the second switch, and when a link for communication between the apparatus and the second switch is faulty, the first standby link is activated, so that the apparatus can communicate with the second switch through the activated first standby link. Therefore, a redundant link is provided for the second switch, to avoid a problem that the second switch cannot continue to work due to a link fault, and improve stability of the communications system.

In a possible implementation of the third aspect, the communications system further includes a third switch, and that a first standby link is configured between the apparatus and the second switch is specifically:
a third link exists between the apparatus and the third switch, and a second standby link is configured between the third switch and the second switch; and
the second communications unit is specifically configured to:
   communicate with the second switch through the third link and the activated first standby link.

It can be learned that compared with directly configuring the first standby link between the second switch and the apparatus, configuring the second standby link between the second switch and the third switch reduces port consumption of the apparatus. Further, the second standby link between the second switch and the third switch may not only provide a redundant link for the second switch, but also provide a redundant link for the third switch, to ensure stable working of more switches, and reduce costs of deploying a standby link.

In another possible implementation of the third aspect, the second communications unit is specifically configured to:
send first activation indication information to the third switch, where the first activation indication information is used by the third switch to activate the second standby link.

In another possible implementation of the third aspect, the apparatus further includes:
a determining unit, configured to determine the first standby link based on information about the first standby link, where the information about the first standby link includes at least one of a priority of the first standby link, a latency of the first standby link, and a hop count from the second switch to the first processor through the first standby link.

In the foregoing method, the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation of the third aspect, the first standby link is a link with a highest priority, a link with a shortest latency, or a link with a smallest hop count from the second switch to the first processor.

In another possible implementation of the third aspect, the apparatus further includes:
an allocation unit, configured to allocate at least one of a bus number, a device number, and a function number to the second switch.

In another possible implementation of the third aspect, the communications system further includes a second non-transparent bridge link, a second mapping relationship exists between the apparatus and the second non-transparent bridge link, and the second mapping relationship is used by the apparatus to communicate with the second switch.

According to a fourth aspect, embodiments of this application disclose an apparatus. The apparatus is a switch in a peripheral component interconnect express PCIe-based communications system. The communications system further includes a first processor and a first switch, a first link exists between the first processor and the first switch, a second link exists between the apparatus and the first switch, and a first standby link is configured between the apparatus and the first processor. The apparatus includes:
a first communications unit, configured to: if the first link and the second link are not faulty, communicate with the first processor through the first link and the second link; and
a second communications unit, configured to: if the first link or the second link is faulty, activate the first standby link, and communicate with the first processor through the activated first standby link.

It can be learned that the standby link is preconfigured between the apparatus and the first processor, and when a link for communication between the apparatus and the first processor is faulty, the standby link is activated, so that the apparatus can communicate with the first processor through the activated standby link. Therefore, a redundant link is provided for the apparatus, to avoid a problem that the apparatus cannot continue to work due to a link fault, and improve stability of the communications system.

In a possible implementation of the fourth aspect, the communications system further includes a third switch, and that a first standby link is configured between the apparatus and the first processor is specifically:
a third link exists between the first processor and the third switch, and a second standby link is configured between the apparatus and the third switch; and
the second communications unit is specifically configured to:
   communicate with the first processor through the third link and the activated second standby link.

It can be learned that, compared with directly configuring the first standby link between the apparatus and the first processor, preconfiguring the second standby link between the apparatus and the third switch reduces port consumption of the first processor. Further, the second standby link between the apparatus and the third switch may not only provide a redundant link for the apparatus, but also provide a redundant link for the third switch, to ensure stable working of more switches, and reduce costs of deploying a standby link.

In another possible implementation of the fourth aspect, the second communications unit is specifically configured to:
send second activation indication information to the third switch, where the second activation indication information is used by the third switch to activate the second standby link.

In another possible implementation of the fourth aspect, the apparatus further includes:
a determining unit, configured to determine the first standby link based on information about the first standby link, where the information about the first standby link includes at least one of a priority of the first standby link, a latency of the first standby link, and a hop count from the second switch to the first processor through the first standby link.

It can be learned that the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation of the fourth aspect, the first standby link is a link with a highest priority, a link with a shortest latency, or a link with a smallest hop count from the second switch to the first processor.

In another possible implementation of the fourth aspect, the communications system further includes a second processor, a fourth link exists between the apparatus and the second processor, and a fifth link exists between the second processor and the third switch;
the first communications unit is further configured to: if the fourth link is not faulty, communicate with the second processor through the fourth link; and
the second communications unit is further configured to: if the fourth link is faulty, communicate with the second processor through the fifth link and the activated second standby link.

In another possible implementation of the fourth aspect, the communications system includes a first control domain and a second control domain; the first control domain includes the apparatus, the first processor, the first switch, and the third switch; the second control domain includes the second processor; a first non-transparent bridge link is configured between the first control domain and the second control domain; and the first non-transparent bridge link is used by the second processor to access the first control domain.

In another possible implementation of the fourth aspect, the second communications unit is further configured to:
receive at least one of a bus number, a device number, and a function number from the first processor.

In another possible implementation of the fourth aspect, the communications system includes a first control domain and a second control domain; the first control domain includes the apparatus, the first processor, the first switch, and the second switch; the second control domain includes the second processor and the third switch; and a second non-transparent bridge link is configured between the first control domain and the second control domain.

In another possible implementation of the fourth aspect, the second communications unit is further configured to:
receive at least one of a bus number, a device number, and a function number from the second processor.

According to a fifth aspect, embodiments of this application disclose an apparatus. The apparatus is a switch in a peripheral component interconnect express PCIe-based communications system. The communications system further includes a first processor, a first switch, and a second switch, a first link exists between the first processor and the first switch, a second link exists between the first processor and the first switch, and a second standby link is configured between the apparatus and the second switch. The apparatus includes:
a receiving unit, configured to receive first activation indication information from the first processor or receive second activation indication information from the second switch; and
an activation unit, configured to activate the second standby link according to the first activation indication information or the second activation indication information.

According to a sixth aspect, embodiments of this application disclose a communications system. The communications system is a peripheral component interconnect express PCIe-based system. The communications system includes a first processor and a plurality of switches, the plurality of switches include a first switch and a second switch, a first link exists between the first processor and the first switch, a second link exists between the first switch and the second switch, and a first standby link is configured between the first processor and the second switch.

If the first link and the second link are not faulty, the first processor communicates with the second switch through the first link and the second link; or
if the first link or the second link is faulty, the first standby link is activated, and the first processor communicates with the second switch through the activated first standby link.

In the PCIe-based communications system, the standby link is preconfigured between the first processor and the second switch, and when a link for communication between the first processor and the second switch is faulty, the standby link is activated, so that the first processor can communicate with the second switch through the activated standby link. Therefore, a redundant link is provided for the second switch, to avoid a problem that the second switch cannot continue to work due to a link fault, and improve stability of the communications system.

In a possible implementation of the sixth aspect, the communications system further includes a third switch, and that a first standby link is configured between the first processor and the second switch is specifically:
a third link exists between the first processor and the third switch, and a second standby link is configured between the third switch and the second switch; and
that the first processor communicates with the second switch through the activated first standby link is specifically:
   the first processor communicates with the second switch through the third link and the activated second standby link.

In the PCIe-based communications system, the standby link (namely, the second standby link) is configured between the second switch and the third switch. Compared with configuring the standby link between the second switch and the first processor, the PCIe-based communications system reduces port consumption of the first processor. Further, the standby link between the second switch and the third switch may not only provide a redundant link for the second switch, but also provide a redundant link for the third switch, to ensure stable working of more switches, and reduce costs of deploying a standby link.

In another possible implementation of the sixth aspect, that the first standby link is activated is specifically:

The first processor sends first activation indication information to the third switch, where the first activation indication information is used by the third switch to activate the second standby link; and/or
the third switch receives the first activation indication information from the first processor; and
the third switch activates the second standby link according to the first activation indication information.

In another possible implementation of the sixth aspect, that the first standby link is activated is specifically:
The second switch sends second activation indication information to the third switch, where the second activation indication information is used by the third switch to activate the second standby link;
the third switch receives the first activation indication information from the first processor; and
the third switch activates the second standby link according to the second activation indication information.

In another possible implementation of the sixth aspect, before the first standby link is activated,
the first standby link is determined based on information about the first standby link, where the information about the first standby link includes at least one of a priority of the first standby link, a latency of the first standby link, and a hop count from the second switch to the first processor through the first standby link.

It can be learned that the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation of the sixth aspect, the first standby link is a link with a highest priority, a link with a shortest latency, or a link with a smallest hop count from the second switch to the first processor.

In another possible implementation of the sixth aspect, the communications system further includes a second processor, a fourth link exists between the second processor and the second switch, and a fifth link exists between the second processor and the third switch;
if the fourth link is not faulty, the second processor communicates with the second switch through the fourth link; or
if the fourth link is faulty, the second processor communicates with the second switch through the fifth link and the activated second standby link.

In the PCIe-based communications system, the second processor may provide standby computing resources for the first processor, to improve stability of the communications system. Alternatively, the second processor may provide distributed computing resources for the first processor, to reduce computing pressure of the first processor. When a link for communication with the second switch is faulty, the second processor may communicate with the second switch through the second standby link, to improve stability of the communications system.

In another possible implementation of the sixth aspect, the communications system includes a first control domain and a second control domain; the first control domain includes the first processor, the first switch, the second switch, and the third switch; the second control domain includes the second processor; a first non-transparent bridge link is configured between the first control domain and the second control domain; and the first non-transparent bridge link is used by the second processor to access the first control domain.

In another possible implementation of the sixth aspect, before the first processor communicates with the second switch through the third link and the activated second standby link,
the first processor allocates at least one of a bus number, a device number, and a function number to the second switch; and
before the second processor communicates with the second switch through the fifth link and the activated second standby link,
a first address mapping relationship exists between the second processor and the first non-transparent bridge link, where the first address mapping relationship is used by the second processor to communicate with the second switch.

In another possible implementation of the sixth aspect, the communications system includes a first control domain and a second control domain; the first control domain includes the first processor, the first switch, and the second switch; the second control domain includes the second processor and the third switch; and a second non-transparent bridge link is configured between the first control domain and the second control domain.

In another possible implementation of the sixth aspect, before the first processor communicates with the second switch through the activated first standby link,
a second address mapping relationship exists between the first processor and the second non-transparent bridge link, where the second address mapping relationship is used by the first processor to communicate with the second switch; and
before the second processor communicates with the second switch through the fifth link and the activated second standby link,
the second processor allocates at least one of a bus number, a device number, and a function number to the second switch.

In another possible implementation of the sixth aspect, the third switch is a switch that is in the plurality of switches and that is separated from the second switch by a hop count greater than or equal to a first threshold, or is a switch that is in the plurality of switches and that is separated from the first processor by a hop count greater than or equal to a second threshold.

In the PCIe-based communications system, during configuration of the standby link, a switch that is separated from the second switch by a hop count greater than or equal to the first threshold is selected as the third switch, so that the standby link can connect switches as many as possible, and redundancy is provided for more switches while ensuring that the second switch has the standby link. If a switch that is separated from the first processor by a hop count greater than or equal to the second threshold is selected, more switches may be ensured during link configuration, so that a quantity of standby links is as small as possible, hardware consumption is reduced, and costs are reduced.

According to a seventh aspect, embodiments of this application disclose a vehicle. The vehicle includes a peripheral component interconnect express PCIe-based communications system, and the communications system is the communications system according to any one of the sixth aspect or the possible implementations of the sixth aspect.

According to an eighth aspect, embodiments of this application disclose a computer-readable storage medium, where the computer-readable storage medium stores a computer program, and when the computer program is run, the method described in any one of the first aspect or the possible implementations of the first aspect, or any one of the second aspect or the possible implementations of the second aspect is performed.

According to a ninth aspect, embodiments of this application disclose a chip system. The chip system includes at least one processor, a memory, and an interface circuit. The interface circuit is configured to provide an information input/output for the at least one processor. The at least one memory stores a computer program. When the computer program is run on one or more processors, the method described in any one of the first aspect or the possible implementations of the first aspect is performed.

According to a tenth aspect, an embodiment of this application discloses a program product. The computer program product includes a computer-readable storage medium, and the computer-readable storage medium includes computer-readable program code. The computer-readable program code is run by one or more processors, to perform the method described in any one of the first aspect or the possible implementations of the first aspect, or any one of the second aspect or the possible implementations of the second aspect of the embodiments of this application.

### BRIEF DESCRIPTION OF DRAWINGS

The following describes accompanying drawings used in embodiments of this application.
FIG. 1 is a schematic architectural diagram of a communications system according to an embodiment of this application;
FIG. 2(a) and FIG. 2(b) are schematic architectural diagrams of another communications system according to an embodiment of this application;
FIG. 3 is a schematic flowchart of a communications method according to an embodiment of this application;
FIG. 4(a) and FIG. 4(b) are schematic architectural diagrams of another communications system according to an embodiment of this application;
FIG. 5(a) and FIG. 5(b) are schematic architectural diagrams of another communications system according to an embodiment of this application;
FIG. 6(a) and FIG. 6(b) are schematic architectural diagrams of another communications system according to an embodiment of this application;
FIG. 7 is a schematic flowchart of another communications method according to an embodiment of this application;
FIG. 8 is a schematic flowchart of another communications method according to an embodiment of this application;
FIG. 9 is a schematic flowchart of another communications method according to an embodiment of this application;
FIG. 10 is a schematic structural diagram of an apparatus according to an embodiment of this application;
FIG. 11 is a schematic structural diagram of another apparatus according to an embodiment of this application; and
FIG. 12 is a schematic structural diagram of another apparatus according to an embodiment of this application.

### DESCRIPTION OF EMBODIMENTS

The following describes embodiments of this application with reference to the accompanying drawings in the embodiments of this application. It should be noted that in this application, the term such as "for example" or "such as" is used to represent giving an example, an illustration, or a description. Any embodiment or design scheme described as "for example" or "such as" in this application should not be explained as being more preferred or having more advantages than another embodiment or design scheme. Exactly, use of the word such as "for example" or "such as" is intended to present a relative concept in a specific manner.

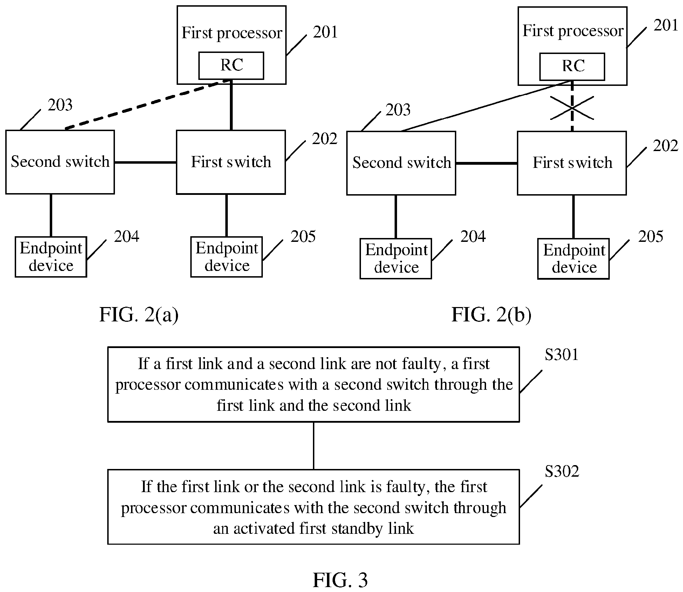

With reference to FIG. 2(a) and FIG. 2(b), the following briefly describes a PCIe-based data transmission architecture in this application by using a communications system including one processor as an example. System architectures and service scenarios are described in this application to more clearly describe the technical solutions in this application, but are not intended to limit the technical solutions provided in this application. A person of ordinary skill in the art may know that as the system architectures evolve and a new service scenario emerges, the technical solutions provided in this application are also applicable to a similar technical problem.

FIG. 2(a) and FIG. 2(b) are schematic architectural diagrams of a communications system according to an embodiment of this application. Referring to FIG. 2(a), the communications system includes a first processor 201, a first switch 202, a second switch 203, an endpoint device 204, and an endpoint device 205.

The first processor 201 is a computing center in the communications system. A root complex (root complex, RC) is integrated on the first processor 201. The RC may include an interface that connects a link, an input/output memory management unit (input/output memory management unit, IOMMU), and the like. The IOMMU may include direct memory access (direct memory access, DMA) remapping. The RC may allocate a bus number (bus number), a device number (device number), and a function number (function number) to each PCIe device (the PCIe device includes a switch, an endpoint device, and the like). Generally, a bus number (bus number), a device number (device number), and a function number (function number) of each PCIe device are unique in a PCIe bus domain in which the PCIe device is located. Therefore, the RC may use a bus number (bus number), a device number (device number), and a function number (function number) of each PCIe device as indexes, to store, in an input and output (In\Out, IO) page table of DMA remapping, an address of main memory space that can be accessed by each PCIe device. The foregoing structure of the communications system is merely an example. In another implementation, the RC may not be integrated on the first processor 201, but is used as an independent chip or integrated on another chip.

During specific implementation, the first processor 201 may be an independent central processing unit (central processing unit, CPU), or may be a processor that may be integrated with another component. Specifically, the first processor 201 may be a vehicle-mounted computing platform or a vehicle-mounted computer, a domain controller, or a multi-domain controller, such as an automatic driving controller, an infotainment controller, or a data center, such as a black box or a dashboard camera in a vehicle. An example in which the first processor 201 is a central processing unit is used for description in this application, and constitutes no limitation on the technical solutions provided in this application.

A switch (for example, the first switch 202 or the second switch 203) performs a routing and switching function in the communications system, aggregates and forwards various data services, such as audio and a video, a synchronization message, and a control message, and is a communications unit in the communications system. Generally, in the PCIe-based communications system, a plurality of switches are networked in a tree structure, and forward data, in a point-to-point (point to point, P2P) working mode, to devices connected to the switches. The first processor 201 can transmit data and a control signal to the switch, and may be considered as a root node of the entire tree structure. It may be understood that the switch may be a device such as a physical switch or a router, or may be a module or an apparatus having a switching function, or may be a virtual container integrated with a routing switching function, or the like.

An endpoint device (for example, the endpoint device 204 or the endpoint device 205) is a terminal device in a communications system. For example, an endpoint device may be a sensor, such as a millimeter wave radar, a laser radar, an ultrasonic radar, a camera, a positioning system (for example, a global positioning system (global positioning system, GPS)), an inertial measurement unit (inertial measurement unit, IMU), a speed sensor, an acceleration sensor, a humidity sensor, a light intensity sensor, or a telematics box (telematics box, T-Box), or may be a play device (for example, a display, an external power amplifier, or a speaker), or may be an input device (a key, a touchscreen, a microphone, and the like). In the embodiments of this application, only the endpoint device 204 and the endpoint device 205 are used for description, and do not constitute a limitation on the technical solutions provided in this application. During specific implementation, a plurality of endpoint devices may be further included, and the plurality of endpoint devices may be connected to one or more switches.

In a conventional communications system, a PCIe protocol usually supports a tree topology connection. The first processor 201 may communicate with the second switch 203 through a link between the RC and the first switch 202 and a link between the first switch 202 and the second switch 203, to further communicate with the endpoint device 205. Communication content may be various data services, such as audio and a video, a synchronization message, and a control message. However, because the PCIe protocol supports the tree topology connection, a redundant link cannot be provided for the communications system. For example, when a link for communication between the first processor 201 and the second switch 203 is faulty, the second switch 203 and the endpoint device 204 cannot work. This affects system stability.

To resolve this problem, in the embodiments of this application, a first standby link is established between the first processor 201 and the second switch 203. The first standby link has two states: a standby state and an active state. When the first standby link is in the standby state, the first standby link is not used for communication between the first processor and the second switch, and it may be considered that the first standby link is in a blocked state, a disabled state, or an inactive state. It may be understood that, when the standby link is in the standby state, some specific control information may be transmitted, for example, activation indication information described below, to activate the standby link. When the first standby link is in the active state, the first standby link may be used for communication between the first processor and the second switch.

For ease of description, in the embodiments of this application, a link between the first processor 201 and the first switch 202 is referred to as a first link, and a link between the first switch 202 and the second switch 203 is referred to as a second link, as shown in FIG. 2(a). When the first link and the second link are not faulty, the first processor 201 communicates with the second switch 203 through the first link and the second link. In this case, the first standby link is in the standby state, and is not used for communication between the first processor 201 and the second switch 203.

When the first link or the second link is faulty, the first standby link is activated, so that the first processor 201 can communicate with the switch 203 through the activated first standby link, as shown in FIG. 2(b). That the first link or the second link is faulty may include the following cases:
Case 1: The first link is faulty. In this case, the activated first standby link may not only be used for communication between the first processor 201 and the second switch 203, but also may be used for communication between the first processor 201 and the first switch 202.
Case 2: The first switch 202 is faulty. If the first switch is not faulty, when the first processor 201 communicates with the second switch 203, the first switch 202 needs to perform forwarding and exchanging. If the first switch 202 is faulty, an exchange function cannot be performed. Consequently, the first link and the second link cannot continue to be used for data transmission, and the first processor 201 cannot communicate with the second switch 203 through the first switch 202.
Case 3: The second link is faulty. In this case, the first processor 201 may continue to communicate with the first switch 202, but cannot communicate with the second switch 203 through the first switch 202.

It should be noted that there may be one or more switches on a path through which the first processor 201 communicates with the second switch 203 by using the first switch 202. In the embodiments of this application, an example in which there is only the first switch 202 is used, and is not intended to limit this application.

It should be noted that the standby link may be a physical direct link, or there may be one or more switches (not shown in FIG. 2(a) and FIG. 2(b)) on the standby link. This is not limited in this application.

In addition, in the PCIe-based communications system in this application, a link between a processor and a switch is a PCIe standard-based link, but a link between a switch and an endpoint device or a link between switches is not necessarily based on the PCIe standard, and some links may be based on another standard. For example, the endpoint device 204 may be an Ethernet device. Therefore, a link between the first switch 202 and the endpoint device 204 may also be an Ethernet standard-based link. For another example, the link between the first switch 202 and the second switch 202 may alternatively be a peripheral component interconnect (peripheral component interconnect, PCI) standard-based link.

FIG. 3 is a schematic flowchart of a communications method according to an embodiment of this application. The communications method may be implemented based on the communications system shown in FIG. 2(a) and FIG. 2(b). The communications method includes at least the following steps.

Step S301: If a first link and a second link are not faulty, a first processor communicates with a second switch through the first link and the second link.

Specifically, the first link exists between the first processor and a first switch, and the second link exists between the first switch and the second switch. When the first link and the second link are not faulty, the first processor may communicate with the second switch through the first link and the second link. Communication content may be various data services, such as audio and a video, a synchronization message, and a control message.

For example, referring to FIG. 2(a), the first processor 201 communicates with the second switch 203 through the first link and the second link sequentially. Therefore, a path through which the first processor 201 communicates with the second switch 203 is "the first processor 201->the RC->the first switch 202->the second switch 203".

It should be noted that in this case, a first standby link between the first processor and the second switch is in a standby state, and the first processor 201 does not communicate with the second switch 203 through the standby link in the standby state.

Step S302: If the first link or the second link is faulty, the first processor communicates with the second switch through the activated first standby link.

Specifically, the first standby link is configured between the first processor and the second switch. When a link for communication between the first processor and the second switch is faulty, the first processor may communicate with the second switch through the activated first standby link.

It can be learned from FIG. 2(a) and FIG. 2(b) that the first standby link is configured, so that the first processor 201 can have at least two paths for communication with the second switch 203.

Referring to FIG. 2(b), the first processor 201 communicates with the second switch 203 through the activated first standby link, and a path through which the first processor 201 communicates with the second switch 203 is "the first processor 201->the RC->the second switch 203".

Optionally, before communication is performed through the activated first standby link, the standby link needs to be activated first. Specifically, one end of the first standby link may receive activation indication information from the other end of the first standby link. During specific implementation, there may be the following two optional methods for activating the first standby link:

Method 1: The first processor sends first activation indication information to the second switch through the first standby link, where the first activation indication information is used to indicate the second switch to activate the first standby link. Correspondingly, the second switch may receive the first activation indication information from the first processor through the first standby link, where the first activation indication information indicates that data transmission needs to be performed through the first standby link. Therefore, the second switch adjusts the first standby link from the standby state to an active state, so that the first processor can communicate with the second switch through the activated first standby link. The method is applicable to a scenario in which the first processor detects a link fault. A specific link fault detection method is not limited in this application.

Method 2: The second switch sends second activation indication information to the first processor through the first standby link, where the second activation indication information is used to indicate the first processor to adjust the first standby link from the standby state to an active state, so that the first processor can communicate with the second switch through the first standby link. The method is applicable to a scenario in which the second switch detects a link fault. A specific link fault detection method is not limited in this application.

It may be understood that one or more standby links may be configured in the communications system according to the embodiments of this application, to further provide redundancy and improve communications reliability.

Further, the first processor may obtain information about the one or more standby links, and determine the at least one standby link based on the obtained information about the standby link. That is, the first standby link is only one link in the one or more links. Information about a standby link includes a latency of the standby link, a priority of the standby link, a hop count to the first processor, and the like. Optionally, in a communications system that includes a plurality of standby links, the first standby link determined by the first processor may be a link with a shortest latency, a highest priority, or a smallest hop count to the first processor.

Further, after activating the standby link, the first processor may reallocate at least one of a bus number (bus number), a device number (device number), and a function number (function number) to the second switch. Specifically, the first processor may re-initialize the second switch (and an endpoint device connected to the switch), and allocate at least one of the bus number, the device number, and the function number to the second switch. Correspondingly, the second switch receives at least one of the bus number, the device number, and the function number from the first processor, to communicate with the first processor.

In the method shown in FIG. 3, the first standby link is preconfigured between the first processor and the second switch, and when a link for communication between the first processor and the second switch is faulty, the first standby link is activated, so that the first processor can communicate with the second switch through the activated first standby link. Therefore, a redundant link is provided for the second switch, to avoid a problem that the second switch cannot continue to work due to a link fault, and improve stability of the communications system.

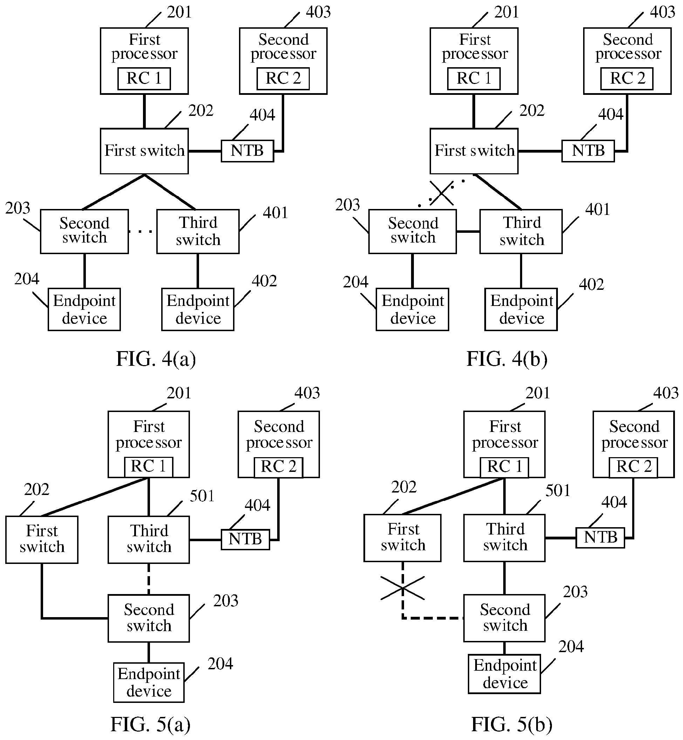

FIG. 4(a) and FIG. 4(b) are schematic architectural diagrams of another communications system according to an embodiment of this application. The communications system is a PCIe-based system. Referring to in FIG. 4(a), the communications system includes a first processor 201, a first switch 202, a second switch 203, a third switch 401, an endpoint device 204, and an endpoint device 402. The endpoint device 402 is connected to the third switch 401. The first processor 201, the first switch 202, the second switch 203, and the third switch 401 all belong to a control domain in which the first processor is located, and the control domain may also be referred to as a first processor system. For ease of description, in the embodiments of this application, a link between the first processor 201 and the third switch 401 is referred to as a third link. As shown in FIG. 2(a), the third link is "the first processor 201->an RC 1->the first switch 202->the third switch 401". It should be noted that apparatuses or devices with a same number are used in the accompanying drawings of this application for ease of description, but are not limited to a same apparatus or device.

That a first standby link is configured between the first processor 201 and the second switch 203 may be specifically: The third link exists between the first processor 201 and the third switch 401, a second standby link is configured between the third switch 401 and the second switch 203, and the first switch 202 is located on a path for communication between the first processor 201 and the third switch 203. That is, the first standby link may not only be a direct physical connection link between the first processor 201 and the second switch 203, but also include two links: the third link and the second standby link.

Referring to FIG. 4(a), when a first link and a second link are not faulty, the first processor 201 communicates with the second switch 203 through the first link and the second link. In this case, the second standby link is in a standby state, and is not used for communication between the first processor 201 and the second switch 203.

Referring to FIG. 4(b), when the second link is faulty, the second standby link is activated, so that the first processor 201 can communicate with the third switch 203 through the third link and the activated second standby link (that is, "the first processor 201->the RC 1->the first switch 202->the third switch 401->the second switch 203").

It should be noted that there may be one or more switches on a path through which the first processor 201 communicates with the second switch 203. Similarly, there may also be one or more switches on a path through which the first processor 201 communicates with the third switch 401. In this embodiment of this application, an example in which there is only the first switch 202 is used. This is not intended to limit this application.

Optionally, the communications system shown in FIG. 4(a) and FIG. 4(b) may further include a second processor 403 and a non-transparent bridge (non-transparent bridge, NTB) link 404. The second processor 403 belongs to a second control domain, which may also be referred to as a second processor system. The second processor 403 may provide standby computing resources for the first processor 201, to improve stability of the communications system. Alternatively, the second processor 403 may provide distributed computing resources for the first processor 201, to reduce computing pressure of the first processor.

In a communications system including a plurality of processors, different control domains may be connected through an NTB. In this case, the NTB may be considered as a PCIe device in two control domains. A mapping relationship exists between a processor and an NTB, and the mapping relationship may be used by a processor in one control domain to access a processor in the other control domain or a PCIe device in the other control domain. For example, a mapping relationship exists between the second processor 403 and the NTB 404, and the mapping relationship may be used by the second processor 403 to communicate with one or more of the second switch 202, the second switch 203, the third switch 401, and the like.

Referring to FIG. 4(a), for ease of description, in the embodiments of this application, a link between the second processor 403 and the second switch 203 is referred to as a fourth link (that is, "the second processor 403->an RC 2->the NTB 404->the first switch 202->the second switch 203"). When the fourth link is not faulty, the second processor 403 communicates with the second switch 203 through the fourth link, and the second standby link between the second switch 203 and the third switch 401 is in a standby state, and is not used for communication between the first processor 201 and the second switch 203.

Referring to FIG. 4(b), for ease of description, in the embodiments of this application, a link between the second processor 403 and the third switch 401 is referred to as a fifth link (that is, "the second processor 403->the RC 2->the NTB 404->the first switch 202->the third switch 401"). The second standby link is configured between the second switch 203 and the third switch 501. When the fourth link is faulty, the second standby link is activated, so that the second processor 403 can communicate with the second switch 203 through the fifth link and the activated second standby link, that is, "the second processor 403->the RC 2->the NTB 404->the first switch 202->the third switch 401->the second switch 203". That the fourth link is faulty may be specifically: a link between the first switch 202 and the second switch 203 in the fourth link is faulty.

Optionally, the third switch 401 may be a switch that is separated from the second switch 203 by a hop count greater than or equal to a first threshold, or is a switch that is in a plurality of switches and that is separated from the first processor by a hop count greater than or equal to a second threshold. During configuration of the second standby link, a switch that is separated from the second switch 203 by a hop count greater than or equal to the first threshold is selected as the third switch 401, so that the second standby link can connect switches as many as possible, and redundancy is provided for more switches while ensuring that the second switch 203 has the second standby link. If a switch that is separated from the first processor 201 by a hop count greater than or equal to the second threshold is selected, more switches may be ensured during link configuration, so that a quantity of second standby links is as small as possible, hardware consumption is reduced, and costs are reduced.

FIG. 5(a) and FIG. 5(b) are schematic architectural diagrams of another communications system according to an embodiment of this application. The communications system is a PCIe-based system. Referring to in FIG. 5(a), the communications system includes a first processor 201, a first switch 202, a second switch 203, a third switch 501, and an endpoint device 204. The first processor 201, the first switch 202, the second switch 203, and the third switch 401 all belong to a control domain in which the first processor is located, and the control domain may also be referred to as a first processor system.

A first standby link is configured between the first processor 201 and the second switch 203. Specifically, a third link (that is, "the first processor 201->an RC 1->the third switch 501") exists between the first processor 201 and the third switch 501, a second standby link is configured between the third switch 501 and the second switch 203, and the first switch 202 is not located on a path for communication between the first processor 201 and the third switch 501. That is, the first standby link may not only be a direct physical connection link between the first processor 201 and the second switch 203, but also include two links: the third link and the second standby link.

Referring to FIG. 5(a), when a first link and a second link are not faulty, the first processor 201 communicates with the second switch 203 through the first link and the second link. In this case, the second standby link is in a standby state, and is not used for data transmission between the first processor 201 and the second switch 203.

Referring to FIG. 5(b), when the first link or the second link is faulty, the second standby link is activated, so that the first processor 201 can communicate with the second switch 203 through the third link and the activated second standby link (that is, "the first processor 201->the RC 1->the third switch 501->the second switch 203"). That the first link or the second link is faulty may include the following cases:
Case 1: The first link is faulty. In this case, the first processor 201 cannot continue to communicate with the first switch 202 and the second switch 203 through the first link.
Case 2: The first switch 202 is faulty. In this case, the first switch 202 cannot perform a switching function. Therefore, the first link and the second link cannot continue to be used for data transmission, so that the first processor 201 cannot communicate with the second switch 203 through the first switch 202.
Case 3: The second link is faulty. In this case, the first processor 201 may continue to communicate with the first switch 202, but cannot communicate with the second switch 203 through the second link.

It should be noted that there may be one or more switches on a path through which the first processor 201 communicates with the second switch 203. Similarly, there may also be one or more switches on a path through which the first processor 201 communicates with the third switch 501. In this embodiment of this application, an example in which there is only the first switch 202 is used. This is not intended to limit this application.

Optionally, the communications system shown in FIG. 5(a) and FIG. 5(b) may further include a second processor 403 and a non-transparent bridge (non-transparent bridge, NTB) link 404. The second processor 403 belongs to a second control domain, which may also be referred to as a second processor system. A mapping relationship exists between the second processor 403 and the NTB 404, and the mapping relationship may be used by the second processor 403 to communicate with one or more of the second switch 202, the second switch 203, the third switch 501, and the like.

Referring to FIG. 5(a), a fourth link (that is, "the second processor 403->an RC 2->the NTB 404->the third switch 501->the RC 1->the first switch 202->the second switch 203") exists between the second processor 403 and the second switch 203. When the fourth link is not faulty, the second processor 403 communicates with the second switch 203 through the fourth link, and the second standby link between the second switch 203 and the third switch 401 is in a standby state, and is not used for communication between the first processor 201 and the second switch 203.

Referring to FIG. 5(b), a fifth link (that is, "the second processor 403->the RC 2->the NTB 404->the third switch 501") exists between the second processor 403 and the third switch 501, and the second standby link is configured between the second switch 203 and the third switch 501. When the fourth link is faulty, the second standby link is activated, so that the second processor 403 can communicate with the second switch 203 through the fifth link and the activated second standby link, that is, "the second processor 403->the RC 2->the NTB->the third switch 501->the second switch 203".

Optionally, the third switch 501 may be a switch that is separated from the second switch 203 by a hop count greater than or equal to a first threshold, or is a switch that is in a plurality of switches and that is separated from the first processor by a hop count greater than or equal to a second threshold. During configuration of the second standby link, a switch that is separated from the second switch 203 by a hop count greater than or equal to the first threshold is selected as the third switch 501, so that the second standby link can connect switches as many as possible, and redundancy is provided for more switches while ensuring that the second switch has the second standby link. If a switch that is separated from the first processor 201 by a hop count greater than or equal to the second threshold is selected, more switches may be ensured during link configuration, so that a quantity of standby links is as small as possible, hardware consumption is reduced, and costs are reduced.

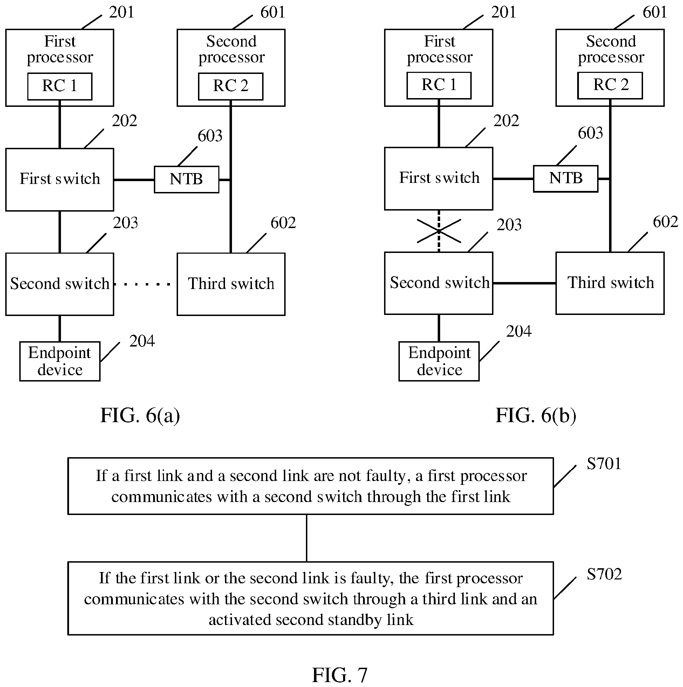

FIG. 6(a) and FIG. 6(b) are schematic architectural diagrams of another communications system according to an embodiment of this application. The communications system is a PCIe-based system. Referring to in FIG. 6(a), the communications system includes a first processor 201, a first switch 202, a second switch 203, an endpoint device 204, a second processor 601, a third switch 602, and an NTB 603. The first processor 201, the first switch 202, the second switch 203, and the endpoint device 204 belong to a first control domain, and the second processor 601 and the third switch 602 belong to a second control domain. The NTB 603 is used for communication between the first control domain and the second control domain. For example, a first mapping relationship may exist between the first processor 201 and the NTB 603, and the first mapping relationship is used by the first processor 201 to communicate with the third switch 602. For another example, a second mapping relationship exists between the second processor 601 and the NTB 603, and the second mapping relationship is used by the second processor 601 to communicate with the first switch 202 or the second switch 203.

It should be noted that there may be one or more switches on a path through which the first processor 201 communicates with the second switch 203. Similarly, there may also be one or more switches on a path through which the first processor 201 communicates with the third switch 602. In this embodiment of this application, an example in which there is only the first switch 202 is used. This is not intended to limit this application. Similarly, another non-transparent bridge link (not shown in FIG. 6(a) and FIG. 6(b)) may also exist between the first control domain and the second control domain, and details are not described herein again.

A first standby link is configured between the first processor 201 and the second switch 203. The first standby link may be specifically: a third link (that is, "the first processor 201->an RC 1->the first switch 202->the NTB 603->the third switch 602") that exists between the first processor 201 and the third switch 602, and a second standby link that is configured between the third switch 602 and the second switch 203. That is, the first standby link may not only be a direct physical connection link between the first processor 201 and the second switch 203, but also include two links: the third link and the second standby link.

Referring to FIG. 6(a), when a first link and a second link are not faulty, the first processor 201 communicates with the second switch 203 through the first link and the second link. In this case, the second standby link is in a standby state, and is not used for communication between the first processor 201 and the second switch 203.

Referring to FIG. 6(b), when the second link is faulty, the second standby link is activated, so that the first processor 201 can communicate with the second switch 203 through the third link and the activated second standby link (that is, "the first processor 201->the RC 1->the first switch 202->the NTB 603->the third switch 602->the second switch 203").

Referring to FIG. 6(a), a fourth link exists between the second processor 601 and the second switch 203. When the fourth link is not faulty, the second processor 601 communicates with the second switch 203 through the fourth link, and the second standby link is in a standby state, and is not used for communication between the second processor 601 and the second switch 203.

Referring to FIG. 6(b), a fifth link (that is, "the second processor 601->an RC 2->the third switch 602") exists between the second processor 601 and the third switch 602. When the fourth link is faulty, the second standby link between the second switch 203 and the third switch 603 is activated, so that the second processor 601 can communicate with the second switch 203 through the fifth link and the activated second standby link, that is, "the second processor 601->the RC 2->the third switch 602->the second switch 203".

Optionally, the third switch 602 may be a switch that is separated from the second switch 203 by a hop count greater than or equal to a first threshold, or is a switch that is in a plurality of switches and that is separated from the first processor 201 by a hop count greater than or equal to a second threshold. During configuration of the second standby link, a switch that is separated from the second switch 203 by a hop count greater than or equal to the first threshold is selected as the third switch 602, so that the second standby link can connect switches as many as possible, and redundancy is provided for more switches while ensuring that the second switch has the second standby link. If a switch that is separated from the first processor 201 by a hop count greater than or equal to the second threshold is selected, more switches may be ensured during link configuration, so that a quantity of second standby links is as small as possible, hardware consumption is reduced, and costs are reduced.

FIG. 7 is a schematic flowchart of a communications method according to an embodiment of this application. The communications method may be implemented based on the communications system shown in FIG. 4(a) and FIG. 4(b), FIG. 5(a) and FIG. 5(b), or FIG. 6(a) and FIG. 6(b). The communications method includes at least the following steps.

Step S701: If a first link and a second link are not faulty, a first processor communicates with a second switch through the first link and the second link.

Specifically, the first link exists between the first processor and a first switch, and the second link exists between the first switch and the second switch. When the first link and the second link are not faulty, the first processor may communicate with the second switch through the first link and the second link.

Referring to FIG. 4(a), the first processor 201 communicates with the second switch 203 through the first link and the second link. Therefore, a path through which the first processor 201 communicates with the second switch 203 is "the first processor 201->the RC 1->the first switch 202->the second switch 203".

In this case, a first standby link is in an inactive state, and the first processor does not communicate with the second switch through the first standby link.

Step S702: If the first link or the second link is faulty, the first processor communicates with the second switch through a third link and an activated second standby link.

Specifically, that the first standby link is configured between the first processor and the second switch may be specifically: The third link exists between the first processor and a third switch, and the second standby link exists between the third switch and the second switch. When the second standby link is in an active state, the second standby link may be used for communication between the first processor and the second switch. If the first link or the second link is faulty, the first processor communicates with the second switch through the third link and the activated second standby link.

For example, referring to FIG. 4(b), the first standby link includes the third link (that is, "the first processor 201->the RC 1->the first switch 202->the third switch 401") and the second standby link (that is, "the third switch 401->the second switch 203"). When the second link is faulty, the first processor 201 communicates with the second switch 203 through the third link and the activated second standby link. Therefore, a path through which the first processor 201 communicates with the second switch 203 is "the first processor 201->the RC 1->the first switch 202->the third switch 401->the second switch 203". Optionally, in the system shown in FIG. 4(a) and FIG. 4(b), a path through which the first processor 201 communicates with the third switch 401 also includes the first link. In this case, another standby link may be provided for the first switch 202, so that the first processor 201 can have two paths for communication with the first switch 202, to provide redundancy for the first switch 202.

For another example, referring to FIG. 5(b), when the first link or the second link is faulty, the first processor 201 communicates with the second switch 203 through the third link and the activated second standby link. Therefore, a path through which the first processor 201 communicates with the second switch 203 is "the first processor 201->the RC 1->the third switch 501->the second switch 203".

For another example, referring to FIG. 6(b), when the first link or the second link is faulty, the first processor 201 communicates with the second switch 203 through the third link and the activated second standby link. Therefore, a path through which the first processor 201 communicates with the second switch 203 is "the first processor 201->the RC 1->the NTB 603->the third switch 602->the second switch 203".

Optionally, before communication is performed through the activated second standby link, the standby link needs to be activated first. Specifically, one end of the second standby link may receive activation indication information from the other end of the first standby link. During specific implementation, there may be the following two optional methods for activating the second standby link:
Method 1: The first processor sends first activation indication information to a switch that configures the second standby link, where the first activation indication information indicates the switch that configures the second standby link to adjust the second standby link from a standby state to an active state.

For example, referring to FIG. 4(b), because a link between the first switch 202 and the second switch 203 is faulty, the first processor 201 sends the first activation indication information to the third switch 401. Correspondingly, the third switch 401 receives the first activation indication information, and activates the second standby link according to the activation indication information.

For example, referring to FIG. 6(b), the first processor 201 may send the first activation indication information to the third switch 602 through the NTB 603. Correspondingly, the third switch 602 receives the first activation indication information, and activates the second standby link according to the first activation indication information. Optionally, the first processor 201 may send intermediate information to the second processor 601 through the NTB 603, and indicate, by using the intermediate information, the second processor 601 to send the first activation indication information to the third switch 602, to activate the second standby link.

It may be understood that one or more standby links may be configured in the communications system according to the embodiments of this application, to further provide redundancy and improve communications reliability.

Further, the first processor may obtain information about the one or more standby links, and determine at least one standby link based on the obtained information about the standby link. That is, the foregoing second standby link or the first standby link on which the second standby link is located is only one link in the one or more links. Information about a standby link includes a latency of the standby link, a priority of the standby link, a hop count to the first processor, and the like.

Optionally, in a communications system that includes a plurality of standby links, the second standby link determined by the first processor may be a link with a shortest latency, a highest priority, or a smallest hop count to the first processor. For example, the second standby link determined by the first processor is a standby link with a highest priority. If priorities descend from "A" to "Z", the first processor determines the second standby link based on information that a priority is "A", and sends activation indication information to the switch that configures the second standby link.

Optionally, in a communications system that includes a plurality of standby links, the first standby link may alternatively be determined by the first processor according to a preset algorithm based on a latency, a priority, and a hop count to the first processor. For example, Table 1 is a possible link information table according to an embodiment of this application, including a link number, a latency, a priority, and a hop count to the first proces sor. The first processor may determine, according to the following algorithm, a standby link that needs to be activated.

**Table 1 Link information table**

| Link number | Latency | Priority | Hop count to the first processor |
|---|---|---|---|
| 1001 | 400 | B | 4 |
| 1002 | 300 | C | 7 |
| 1003 | 500 | A | 11 |

A link weight score S is S = latency × 2 + converted number of a priority × 2 + hop count to a processor × 100 × 1. The priorities from "A" to "Z" are converted to 100, 200, ..., 2600. It can be learned that a link weight score S1 of a link with a link number 1001 is S1 = 400 × 2 + 200 × 2 + 4 × 100 × 1 = 1600, a link weight score S2 of a link with a link number 1002 is S1 = 300 × 2 + 300 × 2 + 7 × 100 × 1 = 1900, and a link weight score S2 of a link with a link number 1002 is S1 = 500 × 2 + 100 × 2 + 11 × 100 × 1 = 2300. The first processor may determine a link with a lowest link weight score as the second standby link that needs to be activated.

It should be noted that the algorithm for determining the second standby link herein is used as an example. In a specific implementation process, another weight or another algorithm may be used for determining.

Method 2: The second switch sends second activation indication information to the third switch through the second standby link, where the second activation indication information may be sent through the second standby link to the other end connected to the second standby link. Specifically, the second switch may learn that the link between the second switch and the first switch is faulty. Therefore, the second switch sends the second activation indication information to the peer end through the second standby link, where the second activation indication information is used to indicate the third switch to adjust the second standby link from a standby state to an active state, so that the second switch can communicate with the first processor through the second standby link.

Further, the second switch may obtain information about the one or more standby links, and determine at least one standby link based on the obtained information about the standby link. That is, the second standby link is only one link in the one or more links. Information about the second standby link includes a latency of the second standby link, a priority of the second standby link, a hop count to the first processor, and the like.

Optionally, in a communications system that includes a plurality of standby links, the second standby link determined by the second switch may be a link with a shortest latency, a highest priority, or a smallest hop count to the first processor.

Optionally, in a communications system that includes a plurality of standby links, the second standby link may alternatively be determined by the second switch according to a preset algorithm based on a latency, a priority, and a hop count to the first processor. For detailed descriptions, refer to related descriptions in Table 1. Details are not described herein again.

Optionally, before communication is performed through the activated second standby link, if the second switch and the first processor are in a same control domain, the first processor may allocate at least one of a bus number, a device number, or a function number to the second switch. Correspondingly, the second switch receives at least one of the bus number, the device number, and the function number from the first processor, to communicate with the first processor. In an optional solution, after the standby link is activated, the first processor reinitializes a switch and an endpoint device, and allocates at least one of a bus number, a device number, and a function number to the switch and the endpoint device, to establish a path to the switch and the endpoint device.

Optionally, before communication is performed through the activated second standby link, if the second switch and the first processor are not in a same control domain, a non-transparent bridge link may exist between a first control domain and a second control domain. For ease of description, in this embodiment of this application, the non-transparent bridge link between the first control domain and the second control domain is referred to as a second non-transparent bridge link, and the second non-transparent bridge link is used by an apparatus in the first control domain to access an apparatus in the second control domain. A mapping relationship exists between the first processor and the second non-transparent bridge link. For ease of description, in the embodiments of this application, the mapping relationship between the first processor and the second non-transparent bridge link is referred to as a second mapping relationship. The second mapping relationship may be used by the first processor to communicate with the second switch. Further, the second mapping relationship may be further used by the first processor to allocate at least one of a bus number, a device number, and a function number to the second switch. Correspondingly, the second switch receives at least one of the bus number, the device number, and the function number from the first processor, to communicate with the first processor.

Optionally, when the communications system further includes a second processor, this embodiment of this application may further include the following steps:

Step S703: If a fourth link is not faulty, the second processor communicates with the second switch through the fourth link.

Specifically, the fourth link exists between the second processor and the second switch. When the fourth link is not faulty, the first processor may communicate with the second switch through the fourth link.

For example, referring to FIG. 4(a), the second processor 403 communicates with the second switch 203 through the first link and the second link. Therefore, the fourth link is "the second processor 403->the RC 2->the first switch 202->the second switch 203".

Step S704: If the fourth link is faulty, the second processor communicates with the second switch through a fifth link and the activated second standby link.

Specifically, the fifth link exists between the second processor and the third switch, and the second standby link is configured between the third switch and the second switch. If the fourth link is faulty, the second processor may communicate with the third switch through the fifth link and the activated second standby link.

For example, referring to FIG. 4(b), the fifth link is "the second processor 403->the RC 2->the first switch 202->the third switch 401", and the second processor 403 communicates with the second switch 203 through the fifth link and the activated second standby link. Therefore, a path through which the second processor 403 communicates with the second switch 203 is "the second processor 403->the RC 2->the first switch 202->the third switch 401->the second switch 203".

For another example, referring to FIG. 5(b), the second processor 403 communicates with the second switch 203 through the fifth link and the activated second standby link. Therefore, a path through which the second processor 403 communicates with the second switch 203 is "the second processor 403->the RC 2->the third switch 501->the second switch 203".

For another example, referring to FIG. 6(b), the second processor 601 communicates with the second switch 203 through the fifth link and the activated second standby link. Therefore, a path through which the second processor 601 communicates with the second switch 203 is "the second processor 601->the RC 2->the third switch 602->the second switch 203". After the second standby link is activated, the second switch 203 already belongs to the second control domain. Therefore, communication between the second processor 601 and the second switch 203 does not pass through a non-transparent bridge link.

Optionally, before communication is performed through the activated second standby link, if the second switch and the second processor are not in a same control domain, a non-transparent bridge link may exist between the second control domain and the first control domain. For ease of description, in this embodiment of this application, the non-transparent bridge link between the second control domain and the first control domain is referred to as a first non-transparent bridge link, and the first non-transparent bridge link is used by an apparatus in the first control domain to access an apparatus in the second control domain. A mapping relationship exists between the second processor and the second non-transparent bridge link. For ease of description, in the embodiments of this application, the relationship between the second processor and the second non-transparent bridge link is referred to as a first mapping relationship. The first mapping relationship may be used by the second processor to communicate with the second switch. Further, the first mapping relationship may be further used by the second processor to allocate at least one of a bus number, a device number, and a function number to the second switch. Correspondingly, the second switch receives at least one of the bus number, the device number, and the function number from the second processor, to communicate with the second processor. In an optional solution, after the second standby link is activated, the second processor reinitializes a switch and an endpoint device, and allocates at least one of a bus number, a device number, and a function number to the switch and the endpoint device, to establish a communications path to the switch and the endpoint device.

Optionally, before communication is performed through the activated second standby link, if the second switch and the second processor are in a same control domain, the second processor may allocate at least one of a bus number, a device number, or a function number to the second switch. Correspondingly, the second switch receives at least one of the bus number, the device number, and the function number from the second processor. In an optional solution, after the second standby link is activated, the second processor reinitializes a switch and an endpoint device, and allocates at least one of a bus number, a device number, and a function number to the switch and the endpoint device, to establish a communications path to the switch and the endpoint device.

In the communications method shown in FIG. 7, the second standby link is preconfigured between the second switch and the third switch, and when a link for communication between the first processor and the second switch is faulty, the second standby link is activated, so that the first processor can communicate with the second switch through the activated second standby link. Therefore, a redundant link is provided for the second switch, to avoid a problem that the second switch cannot continue to work due to a link fault, and improve stability of the communications system. Further, compared with configuring the first standby link between the second switch and the first processor, the communications method shown in FIG. 6 reduces port consumption of the first processor. In addition, the second standby link between the second switch and the third switch may not only provide a redundant link for the second switch, but also provide a redundant link for the third switch, to ensure stable working of more switches, and reduce costs of deploying a standby link.

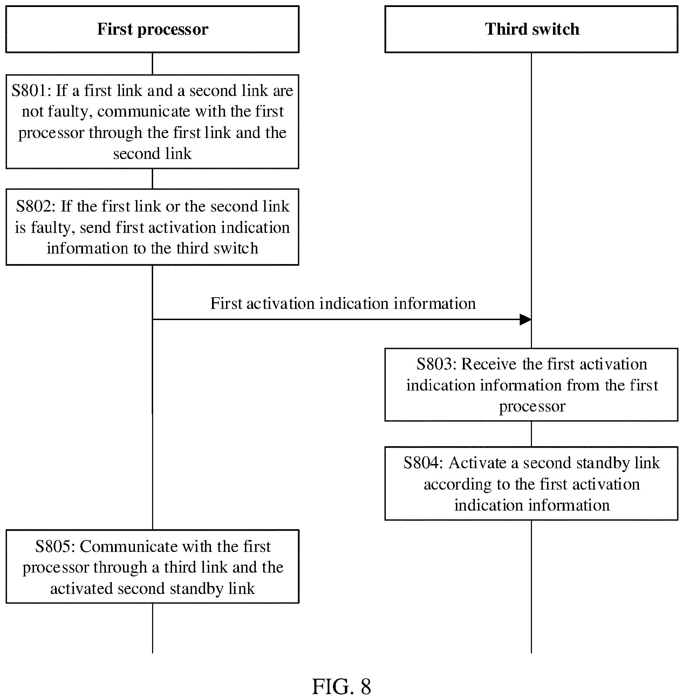

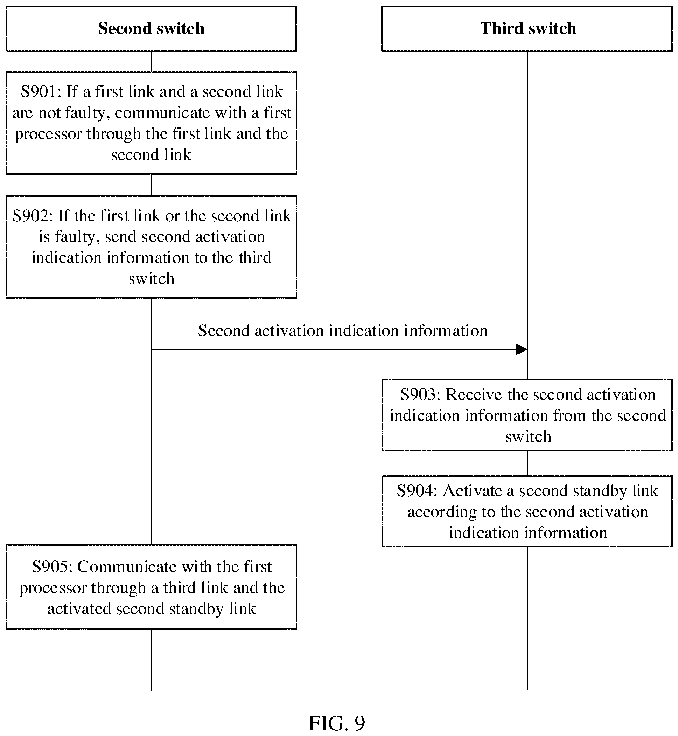

The method embodiment shown in FIG. 7 includes many possible implementation solutions. The following separately describes some implementation solutions with reference to FIG. 8 and FIG. 9. It should be noted that for related concepts, operations, or logical relationships that are not explained in FIG. 8 and FIG. 9, refer to corresponding descriptions in the embodiment shown in FIG. 7. Therefore, details are not described.

FIG. 8 is a schematic flowchart of a communications method according to an embodiment of this application. The communications method may be implemented based on the communications system shown in any embodiment in FIG. 4(a) and FIG. 4(b), FIG. 5(a) and FIG. 5(b), or FIG. 6(a) and FIG. 6(b). The communications method includes at least the following steps.

Step S801: If a first link and a second link are not faulty, a first processor communicates with a second switch through the first link and the second link.

Specifically, for detailed descriptions, refer to step S701.

Step S802: If the first link or the second link is faulty, the first processor sends first activation indication information to a third switch.

Specifically, that a first standby link is configured between the first processor and the second switch may be specifically: A third link exists between the first processor and the third switch, and a second standby link exists between the third switch and the second switch. When the second standby link is in an active state, the second standby link may be used for communication between the first processor and the second switch. If the first link or the second link is faulty, the first processor communicates with the second switch through the third link and the activated second standby link. The first processor may send the first activation indication information to the third switch through the third link.

It may be understood that one or more standby links may be configured in the communications system according to the embodiments of this application, to further provide redundancy and improve communications reliability.

Further, before sending the first activation indication information, the first processor may obtain information about the one or more standby links, and determine at least one standby link based on the obtained information about the standby link. That is, the second standby link or the first standby link on which the second standby link is located is only one link in the one or more links. Information about a standby link includes a latency of the standby link, a priority of the standby link, a hop count to the first processor, and the like.

Optionally, in a communications system that includes a plurality of standby links, the second standby link determined by the first processor may be a link with a shortest latency, a highest priority, or a smallest hop count to the first processor.

Optionally, in a communications system that includes a plurality of standby links, the second standby link may alternatively be determined by the first processor according to a preset algorithm based on a latency, a priority, and a hop count to the first processor. For detailed descriptions, refer to related descriptions in Table 1. Details are not described herein again.

Step S803: The third switch receives the first activation indication information from the first processor.

Specifically, the third switch may receive the first activation indication information from the first processor through the third link.

Step S804: The third switch activates the second standby link according to the first activation indication information.

Specifically, the second standby link is in a standby state before being activated, and is not used for communication between the first processor and the second switch. The third switch may adjust the second standby link from a standby state to an active state according to the activation indication information, so that the first processor can communicate with the second switch through the third link and the second standby link.

Step S805: The first processor communicates with the second switch through the third link and the activated second standby link.

Specifically, when the second standby link is in an active state, the second standby link may be used for communication between the first processor and the second switch. If the first link or the second link is faulty, the first processor communicates with the second switch through the third link and the activated second standby link.

For example, referring to FIG. 4(b), when the second link is faulty, the first processor 201 communicates with the second switch 203 through the third link and the activated second standby link. Therefore, a path through which the first processor 201 communicates with the second switch 203 is "the first processor 201->the RC 1->the first switch 202->the third switch 401->the second switch 203". Optionally, in the system shown in FIG. 4(a) and FIG. 4(b), a path through which the first processor 201 communicates with the third switch 203 also includes the first link. In this case, another standby link may be provided for the first switch, so that the first processor can have two paths for communication with the first switch, to provide redundancy for the first switch.

For another example, referring to FIG. 5(b), when the first link or the second link is faulty, the first processor 201 communicates with the second switch 203 through the third link and the activated second standby link. Therefore, a path through which the first processor 201 communicates with the second switch 203 is "the first processor 201->the RC 1->the third switch 501->the second switch 203".

For another example, referring to FIG. 6(b), when the first link or the second link is faulty, the first processor 201 communicates with the second switch 203 through the third link and the activated second standby link. Therefore, a path through which the first processor 201 communicates with the second switch 203 is "the second processor 601->the RC 2->the NTB 603->the third switch 602->the second switch 203".

Optionally, before communication is performed through the activated second standby link, if the second switch and the first processor are in a same control domain, the first processor may allocate at least one of a bus number, a device number, or a function number to the second switch. In an optional solution, after the second standby link is activated, the first processor reinitializes a switch and an endpoint device, and allocates at least one of a bus number, a device number, and a function number to the switch and the endpoint device, to establish a communications path to the switch and the endpoint device.

Optionally, before communication is performed through the activated second standby link, if the second switch and the first processor are not in a same control domain, a second non-transparent bridge link may exist between a first control domain and a second control domain. A second mapping relationship may exist between the first processor and the second non-transparent bridge link, and the second mapping relationship may be used by the first processor to communicate with the second switch. Further, the second address mapping relationship may be further used by the first processor to allocate at least one of a bus number, a device number, and a function number to the second switch. In an optional solution, after the standby link is activated, the first processor reinitializes a switch and an endpoint device, and allocates at least one of a bus number, a device number, and a function number to the switch and the endpoint device, to establish a communications path to the switch and the endpoint device.

Optionally, when the communications system further includes a second processor, this embodiment of this application may further include step 806 or step 807.

Step S806: If a fourth link is not faulty, the second processor communicates with the second switch through the fourth link.

Specifically, the fourth link exists between the second processor and the second switch. When the fourth link is not faulty, the second processor may communicate with the second switch through the fourth link.

For example, referring to FIG. 4(a), the second processor 403 communicates with the second switch 203 through the NTB 404 and the first switch 202. Therefore, a path through which the second processor 403 communicates with the second switch 203 is "the second processor 403->the RC 2->the NTB 404->the first switch 202->the second switch 203".

Step S807: If the fourth link is faulty, the second processor communicates with the second switch through a fifth link and the activated second standby link.

Specifically, when the second standby link is in an active state, the second standby link may be used for communication between the second processor and the second switch. The fifth link exists between the second processor and the third switch, and the second standby link exists between the third switch and the second switch. If the fourth link is faulty, the second processor may communicate with the second switch through the fifth link and the activated second standby link.

For example, referring to FIG. 4(b), the second processor 403 communicates with the second switch 203 through the fifth link and the activated second standby link. Therefore, a path through which the second processor 403 communicates with the second switch 203 is "the second processor 403->the RC 2->the NTB 404->the first switch 202->the third switch 401->the second switch 203".

For another example, referring to FIG. 5(b), the second processor 403 communicates with the second switch 203 through the fifth link and the activated second standby link. Therefore, a path through which the second processor 403 communicates with the second switch 203 is "the second processor 403->the RC 2->the NTB 404->the third switch 501->the second switch 203".

For another example, referring to FIG. 6(b), the second processor 601 communicates with the second switch 203 through the fifth link and the activated second standby link. Therefore, a path through which the second processor 601 communicates with the second switch 203 is "the second processor 601->the RC 2->the third switch 602->the second switch 203".

Optionally, before communication is performed through the activated standby link, if the second switch and the second processor are not in a same control domain, a first non-transparent bridge link may exist between a first control domain and a second control domain. The first mapping relationship may exist between the second processor and the second non-transparent bridge link, and the first mapping relationship is used by the second processor to communicate with the second switch. Further, the first address mapping relationship may be further used by the second processor to allocate at least one of a bus number, a device number, and a function number to the second switch. In an optional solution, after the standby link is activated, the second processor reinitializes a switch and an endpoint device, and allocates at least one of a bus number, a device number, and a function number to the switch and the endpoint device, to establish a communications path to the switch and the endpoint device.

Optionally, before communication is performed through the activated second standby link, if the second switch and the second processor are in a same control domain, the second processor may allocate at least one of a bus number, a device number, or a function number to the second switch. In an optional solution, after the second standby link is activated, the second processor reinitializes a switch and an endpoint device, and allocates at least one of a bus number, a device number, and a function number to the switch and the endpoint device, to establish a communications path to the switch and the endpoint device.

In the communications method shown in FIG. 8, the second standby link is preconfigured between the second switch and the third switch, and when a link for communication between the first processor and the second switch is faulty, the second standby link is activated, so that the first processor can communicate with the second switch through the activated second standby link. Therefore, a redundant link is provided for the second switch, to avoid a problem that the second switch cannot continue to work due to a link fault, and improve stability of the communications system. Further, compared with configuring the first standby link between the second switch and the first processor, the communications method shown in FIG. 7 reduces port consumption of the first processor. In addition, the second standby link between the second switch and the third switch may not only provide a redundant link for the second switch, but also provide a redundant link for the third switch, to ensure stable working of more switches, and reduce costs of deploying a standby link.

FIG. 9 is a schematic flowchart of a communications method according to an embodiment of this application. The communications method may be implemented based on the communications system shown in any embodiment in FIG. 4(a) and FIG. 4(b), FIG. 5(a) and FIG. 5(b), or FIG. 6(a) and FIG. 6(b). The communications method includes at least the following steps.

Step S901: If a first link and a second link are not faulty, a second switch communicates with a first processor through the first link and the second link.

Specifically, for detailed descriptions, refer to corresponding descriptions in step S701.

Step S902: If the first link or the second link is faulty, the second switch sends second activation indication information to a third switch.

Specifically, that a first standby link is configured between the first switch and the first processor may be specifically: A third link exists between the first processor and the third switch, and a second standby link exists between the third switch and the second switch. When the second standby link is in an active state, the second standby link may be used for communication between the first processor and the second switch. If the first link or the second link is faulty, the first processor may communicate with the second switch through the third link and the activated second standby link. The standby link may be used to transfer the activation indication information. Therefore, the second switch may send the first activation indication information to the third switch through the standby link.

It may be understood that one or more standby links may be configured in the communications system according to the embodiments of this application, to further provide redundancy and improve communications reliability.

Further, before sending the first activation indication information, the second switch may obtain information about the one or more standby links, and determine at least one standby link based on the obtained information about the standby link. That is, the second standby link or the first standby link on which the second standby link is located is only one link in the one or more links. Information about a standby link includes a latency of the standby link, a priority of the standby link, a hop count to the first processor, and the like.

Optionally, the second standby link determined by the second switch may be a link with a shortest latency, a highest priority, or a smallest hop count to the first processor. For example, the second standby link determined by the second switch is a standby link with a highest priority. If priorities descend from "A" to "Z", the second switch determines the standby link based on information that a priority is "A", and sends the activation indication information to the switch that configures the standby link.

Optionally, in a communications system that includes a plurality of standby links, the second standby link may alternatively be determined by the second switch according to a preset algorithm based on a latency, a priority, and a hop count to the first processor. For detailed descriptions, refer to related descriptions in Table 1. Details are not described herein again.

Step S903: The third switch receives the second activation indication information from the second switch.

Specifically, one end of the second standby link may receive the activation indication information from the other end of the second standby link, and the third switch may receive the second activation indication information from the second switch through the second standby link.

Step S904: The third switch activates the second standby link according to the second activation indication information.

Specifically, the second standby link is in a standby state before being activated, and is not used for communication between the first processor and the second switch. The third switch may adjust the second standby link from a standby state to an active state according to the second activation indication information, so that the first processor can transmit data to the second switch through the activated second standby link.

Step S905: The second switch communicates with the first processor through the third link and the activated second standby link.

Specifically, when the standby link is in an active state, the standby link may be used for communication between the first processor and the second switch. If the first link or the second link is faulty, the second switch communicates with the first processor through the third link and the activated standby link.

For example, referring to FIG. 4(b), when the second link is faulty, the second switch 203 communicates with the first processor 201 through the third link and the activated second standby link. Therefore, a path for communication between the second switch 203 and the first processor 201 is "the second switch 203->the third switch 401->the first switch 202->the RC 1->the first processor 201". Optionally, in the system shown in FIG. 4(a) and FIG. 4(b), a path between the first processor 201 and the third switch 401 also includes the first link. In this case, another standby link may be provided for the first switch 202, so that two communications paths from the first processor 201 to the first switch 202 can be established, to provide redundancy for the first switch.

For another example, referring to FIG. 5(b), when the first link or the second link is faulty, the second switch 203 communicates with the first processor 201 through the third link and the activated second standby link. Therefore, a path through which the first processor 201 communicates with the first processor 201 is "the second switch 203->the third switch 501->the RC 1->the first processor 201".

Optionally, before communication is performed through the activated second standby link, if the second switch and the first processor are in a same control domain, the first processor may allocate at least one of a bus number, a device number, or a function number to the second switch. Correspondingly, the second switch receives at least one of the bus number, the device number, and the function number from the first processor, to communicate with the first processor.

Optionally, before communication is performed through the activated second standby link, if the second switch and the first processor are not in a same control domain, a second non-transparent bridge link may exist between a first control domain and a second control domain. The second mapping relationship may exist between the first processor and the second non-transparent bridge link, and the second mapping relationship may be used by the first processor to communicate with the second switch. Further, the second mapping relationship may be further used by the first processor to allocate at least one of a bus number, a device number, and a function number to the second switch. Correspondingly, the second switch receives at least one of the bus number, the device number, and the function number from the first processor, to communicate with the first processor.

Optionally, when the communications system further includes a second processor, this embodiment of this application may further include step 906 or step 907.

Step S906: If a fourth link is not faulty, the second processor communicates with the second switch through the fourth link.

Specifically, the fourth link exists between the second switch and the second processor. When the fourth link is not faulty, the second processor may communicate with the second switch through the fourth link. Referring to FIG. 4(a), the second switch 203 communicates with the second processor 403 through the fourth link, that is, "the second switch 203->the first switch 202->the NTB 404->the RC 2->the second processor 403".

Step S907: If the fourth link is faulty, the second switch communicates with the second processor through a fifth link and the activated second standby link.

Specifically, when the second standby link is in an active state, the second standby link may be used for communication between the second processor and the second switch. The fifth link exists between the third switch and the second processor, and the second standby link exists between the third switch and the second switch. If the fourth link is faulty, the second switch may communicate with the second processor through the fifth link and the activated second standby link.

For example, referring to FIG. 4(b), the fifth link is "the third switch 401->the first switch 202->the NTB 404->the RC 2->the second processor 403". The second switch 203 communicates with the second processor 403 through the fifth link and the activated second standby link. Therefore, a path through which the second switch 203 communicates with the second processor 403 is "the second switch 203->the third switch 401->the first switch 202->the NTB 404->the RC 2->the second processor 403".

For another example, referring to FIG. 5(b), the second switch 203 communicates with the second processor 403 through the fifth link and the activated second standby link. Therefore, a path through which the second switch 203 communicates with the second processor 403 is "the second switch 203->the third switch 501->the NTB 404->the RC 2->the second processor 403".

For another example, referring to FIG. 6(b), the second switch 203 communicates with the second processor 601 through the fifth link and the activated second standby link. Therefore, a path through which the second switch 203 communicates with the second processor 601 is "the second switch 203->the third switch 602->the RC 2->the second processor 601". After the second standby link is activated, the second switch 203 already belongs to the second control domain. Therefore, communication between the second switch 203 and the second processor 601 does not pass through a non-transparent bridge link.

Optionally, before communication is performed through the activated second standby link, if the second switch and the second processor are not in a same control domain, a first non-transparent bridge link may exist between a second control domain and a first control domain. A first mapping relationship may exist between the second processor and the first non-transparent bridge link, and the first mapping relationship is used by the second processor to communicate with the second switch. Further, the first mapping relationship may be further used by the second processor to allocate at least one of a bus number, a device number, and a function number to the second switch. Correspondingly, the second switch receives at least one of the bus number, the device number, and the function number from the second processor, to communicate with the second processor.

Optionally, before communication is performed through the activated standby link, if the second switch and the second processor are in a same control domain, the second processor may allocate at least one of a bus number, a device number, or a function number to the second switch. Correspondingly, the second switch receives at least one of the bus number, the device number, and the function number from the second processor.

In the communications method shown in FIG. 9, the second standby link is preconfigured between the second switch and the third switch, and when a link for communication between the first processor and the second switch is faulty, the second standby link is activated, so that the first processor can communicate with the second switch through the activated second standby link. Therefore, a redundant link is provided for the second switch, to avoid a problem that the second switch cannot continue to work due to a link fault, and improve stability of the communications system. Further, compared with configuring the first standby link between the second switch and the first processor, the communications method shown in FIG. 9 reduces port consumption of the first processor. In addition, the second standby link between the second switch and the third switch may not only provide a redundant link for the second switch, but also provide a redundant link for the third switch, to ensure stable working of more switches, and reduce costs of deploying a standby link.

The foregoing describes in detail the method in the embodiments of this application. The following provides an apparatus in the embodiments of this application.

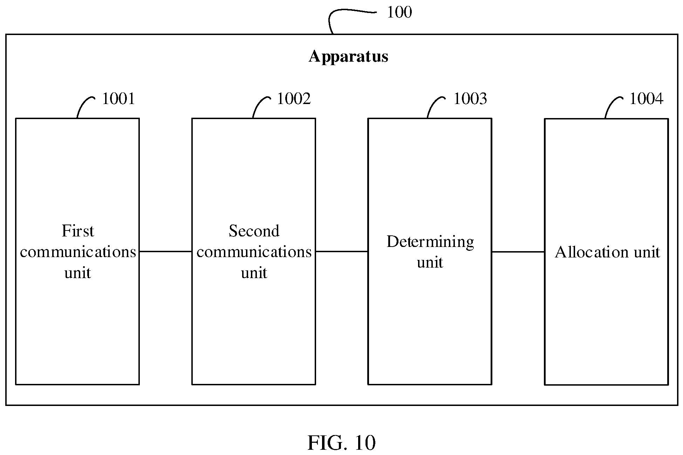

FIG. 10 is a schematic structural diagram of an apparatus 100 according to an embodiment of this application. The apparatus 100 may be the first processor in any one of the foregoing embodiments in FIG. 2(a) and FIG. 2(b), FIG. 3, FIG. 4(a) and FIG. 4(b), FIG. 5(a) and FIG. 4(b), FIG. 6(a) and FIG. 6(b), FIG. 8, or FIG. 9. The apparatus 100 may be specifically a processor or a module in a processor in a peripheral component interconnect express PCIe-based communications system. The communications system further includes a first switch and a second switch, a first link exists between the apparatus 100 and the first switch, and a second link exists between the first switch and the second switch. A first standby link is configured between the apparatus 100 and the second switch. The apparatus 100 includes a first communications unit 1001 and a second communications unit 1002. Detailed descriptions of the units are as follows:
The first communications unit 1001 is configured to: if the first link and the second link are not faulty, communicate with the second switch through the first link and the second link. For a specific implementation, refer to detailed descriptions of step S301 in the embodiment shown in FIG. 3, step S701 in the embodiment shown in FIG. 7, step S801 in the embodiment shown in FIG. 8, or step S901 in the embodiment shown in FIG. 9. Details are not described herein again.

The second communications unit 1002 is configured to: if the first link or the second link is faulty, activate the first standby link, and communicate with the second switch through the activated first standby link. For a specific implementation, refer to step S302 in the embodiment shown in FIG. 3, step S702 in the embodiment shown in FIG. 7, detailed descriptions of steps S802, S803, S804, and S805 in the embodiment shown in FIG. 8, and detailed descriptions of step S902, S903, S904, and S905 in the embodiment shown in FIG. 9. Details are not described herein again.

It can be learned that the first standby link is preconfigured between the apparatus 100 and the second switch, and when a link for communication between the apparatus 100 and the second switch is faulty, the first standby link is activated, so that the apparatus can communicate with the second switch through the activated first standby link. Therefore, a redundant link is provided for the second switch, to avoid a problem that the second switch cannot continue to work due to a link fault, and improve stability of the communications system.

It should be noted herein that the division into the first communications unit and the second communications unit is merely logical division based on functions, and is not used as a limitation on a specific structure of the apparatus 100. During specific implementation, some units may be subdivided into more fine units, or some units may be combined into one unit. However, regardless of whether these units are subdivided or combined, a similar procedure performed by the apparatus 100 in a communication process is the same. Generally, each unit corresponds to program code (or program instructions) of the unit. When the program code corresponding to these units is run on a processor, the unit is enabled to perform a corresponding procedure to implement a corresponding function.

In a possible implementation, the communications system further includes a third switch, and that a first standby link is configured between the apparatus 100 and the second switch may be specifically:
a third link exists between the apparatus 100 and the third switch, and a second standby link is configured between the third switch and the second switch; and
the second communications unit 1002 is specifically configured to:
   communicate with the second switch through the third link and the activated second standby link.

It can be learned that compared with configuring the first standby link between the second switch and the apparatus 100, configuring the second standby link between the second switch and the third switch reduces port consumption of the apparatus 100. Further, the second standby link between the second switch and the third switch may not only provide a redundant link for the second switch, but also provide a redundant link for the third switch, to ensure stable working of more switches, and reduce costs of deploying a standby link.

In another possible implementation, the second communications unit 1002 is specifically configured to:
send first activation indication information to the third switch, where the first activation indication information is used by the third switch to activate the second standby link.

In another possible implementation, the apparatus 100 further includes:
a determining unit 1003, configured to determine the first standby link based on information about the first standby link, where the information about the first standby link includes at least one of a priority of the first standby link, a latency of the first standby link, and a hop count from the second switch to the first processor through the first standby link.

It can be learned that the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation, the first standby link is a link with a highest priority, a link with a shortest latency, or a link with a smallest hop count from the second switch to the first processor.

In another possible implementation, the apparatus 100 further includes:
an allocation unit 1004, configured to allocate at least one of a bus number, a device number, and a function number to the second switch.

In another possible implementation, the communications system further includes a second non-transparent bridge link, a second mapping relationship exists between the apparatus 100 and the second non-transparent bridge link, and the second mapping relationship is used by the apparatus to communicate with the second switch.

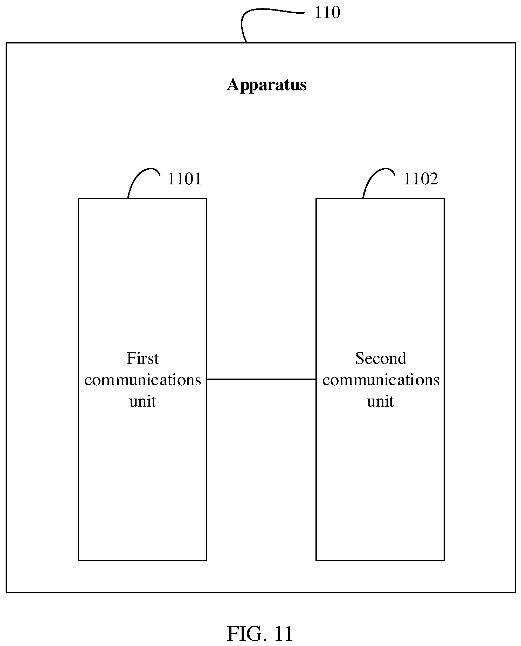

FIG. 11 is a schematic structural diagram of an apparatus 110 according to an embodiment of this application. The apparatus 110 may be the second switch in any one of the foregoing embodiments in FIG. 2(a) and FIG. 2(b), FIG. 3, FIG. 4(a) and FIG. 4(b), FIG. 5(a) and FIG. 4(b), FIG. 6(a) and FIG. 6(b), FIG. 8, or FIG. 9. The apparatus 110 may be specifically a switch or a module in a switch in a peripheral component interconnect express PCIe-based communications system. The communications system further includes a first processor and a first switch, a first link exists between the first processor and the first switch, and a second link exists between the apparatus 110 and the first switch. A first standby link is configured between the apparatus 110 and the first processor. The apparatus 110 includes a first communications unit 1101 and a second communications unit 1102. Detailed descriptions of the units are as follows:
The first communications unit 1101 is configured to: if the first link and the second link are not faulty, communicate with the first processor through the first link and the second link. For a specific implementation, refer to detailed descriptions of step S301 in the embodiment shown in FIG. 3, step S701 in the embodiment shown in FIG. 7, step S801 in the embodiment shown in FIG. 8, or step S901 in the embodiment shown in FIG. 9. Details are not described herein again.

The second communications unit 1102 is configured to: if the first link or the second link is faulty, activate the first standby link, and communicate with the first processor through the activated first standby link. For a specific implementation, refer to step S302 in the embodiment shown in FIG. 3, step S702 in the embodiment shown in FIG. 7, detailed descriptions of steps S802, S803, S804, and S805 in the embodiment shown in FIG. 8, and detailed descriptions of step S902, S903, S904, and S905 in the embodiment shown in FIG. 9. Details are not described herein again.

It can be learned that the first standby link is preconfigured between the apparatus 110 and the first processor, and when a link for communication between the apparatus 100 and the first processor is faulty, the first standby link is activated, so that the apparatus 110 can communicate with the first processor through the activated first standby link. Therefore, a redundant link is provided for the apparatus 110, to avoid a problem that the apparatus 110 cannot continue to work due to a link fault, and improve stability of the communications system.

It should be noted herein that the division into the plurality of units is merely logical division based on functions, and is not used as a limitation on a specific structure of the apparatus 110. During specific implementation, some units may be subdivided into more fine units, or some units may be combined into one unit. However, regardless of whether these units are subdivided or combined, a similar procedure performed by the apparatus 110 in a communication process is the same. Generally, each unit corresponds to program code (or program instructions) of the unit. When the program code corresponding to these units is run on a processor, the unit is enabled to perform a corresponding procedure to implement a corresponding function.

In a possible implementation, the communications system further includes a third switch, and that a first standby link is configured between the apparatus and the first processor is specifically: a third link exists between the first processor and the third switch, and a standby link is configured between the apparatus and the third switch; and
the second communications unit 1102 is specifically configured to:
communicate with the first processor through the third link and the activated second standby link.

It can be learned that, compared with configuring the second standby link between the apparatus and the first processor, preconfiguring the second standby link between the apparatus 110 and the third switch reduces port consumption of the first processor. Further, the second standby link between the apparatus 110 and the third switch may not only provide a redundant link for the apparatus 110, but also provide a redundant link for the third switch, to ensure stable working of more switches, and reduce costs of deploying a standby link.

In another possible implementation, the second communications unit 1102 is specifically configured to:
send second activation indication information to the third switch, where the second activation indication information is used by the third switch to activate the second standby link.

In another possible implementation, the apparatus 110 further includes:
a determining unit 1103, configured to determine the first standby link based on information about the first standby link, where the information about the first standby link includes at least one of a priority of the first standby link, a latency of the first standby link, and a hop count from the second switch to the first processor through the standby link.

It can be learned that the first standby link is determined based on the priority of the link, the latency of the link, or the hop count to the first processor. When a plurality of standby links are included, a link that better meets a communications requirement may be determined, to improve efficiency of communication between the first processor and the second switch.

In another possible implementation, the first standby link is a link with a highest priority, a link with a shortest latency, or a link with a smallest hop count from the second switch to the first processor.

In another possible implementation, the communications system further includes a second processor, a fourth link exists between the apparatus 110 and the second processor, and a fifth link exists between the second processor and the third switch;
the first communications unit 1101 is further configured to: if the fourth link is not faulty, communicate with the second processor through the fourth link; and
the second communications unit 1102 is further configured to: if the fourth link is faulty, communicate with the second processor through the fifth link and the activated second standby link.

In another possible implementation, the communications system includes a first control domain and a second control domain; the first control domain includes the apparatus, the first processor, the first switch, and the third switch; the second control domain includes the second processor; a first non-transparent bridge link is configured between the first control domain and the second control domain; and the first non-transparent bridge link is used by the second processor to access the first control domain.

In another possible implementation, the second communications unit 1102 is further configured to:
receive at least one of a bus number, a device number, and a function number from the first processor.

In another possible implementation, the communications system includes a first control domain and a second control domain; the first control domain includes the apparatus 110, the first processor, the first switch, and the second switch; the second control domain includes the second processor and the third switch; and a second non-transparent bridge link is configured between the first control domain and the second control domain.

In another possible implementation, the second communications unit 1102 is further configured to:
receive at least one of a bus number, a device number, and a function number from the second processor.

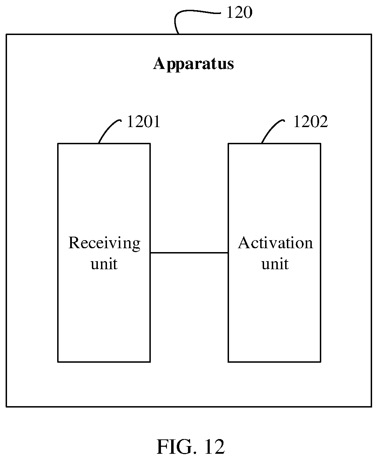

FIG. 12 is a schematic structural diagram of an apparatus 120 according to an embodiment of this application. The apparatus 120 may be the third switch in any one embodiment in FIG. 4(a) and FIG. 4(b), FIG. 5(a) and FIG. 5(b), FIG. 6(a) and FIG. 6(b), FIG. 8, or FIG. 9. The apparatus 120 may be specifically a switch or a module in a switch in a peripheral component interconnect express PCIe-based communications system. The communications system further includes a first processor, a first switch, and a second switch, a first link exists between the first processor and the first switch, and a second link exists between the second switch and the first switch. A second standby link is configured between the apparatus 120 and the second switch. The apparatus 120 includes a receiving unit 1201 and an activation unit 1202. Detailed descriptions of the units are as follows:

The receiving unit 1201 is configured to receive first activation indication information from the first processor or receive second activation indication information from the second switch; and
the activation unit 1202 is configured to activate the first standby link according to the first activation indication information or the second activation indication information.

It should be noted herein that the division into the plurality of units is merely logical division based on functions, and is not used as a limitation on a specific structure of the apparatus 120. During specific implementation, some units may be subdivided into more fine function modules, or some units may be combined into one function module. However, regardless of whether these units are subdivided or combined, a similar procedure performed by the apparatus 120 in a communication process is the same. Generally, each unit corresponds to program code (or program instructions) of the unit. When the program code corresponding to these units is run on a processor, the unit is enabled to perform a corresponding procedure to implement a corresponding function.

The embodiments of this application further provide a computer-readable storage medium. The computer-readable storage medium stores a computer program. When the computer program is run on one or more processors, the method according to any embodiment shown in FIG. 3, FIG. 7, FIG. 8, or FIG. 9 is performed.

The embodiments of this application further provide a chip system. The chip system includes at least one processor, a memory, and an interface circuit. The interface circuit is configured to provide an information input/output for the at least one processor. The at least one memory stores a computer program. When the computer program is run on one or more processors, the method according to any embodiment shown in FIG. 3, FIG. 7, FIG. 8, or FIG. 9 is performed.

The embodiments of this application further provide a computer program product. The computer program product includes a computer-readable storage medium, and the computer-readable program code includes computer-readable program code. The computer-readable program code is run by one or more processors, to perform the method described in any embodiment shown in FIG. 3, FIG. 7, FIG. 8, or FIG. 9.

All or some of the foregoing embodiments may be implemented by software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, all or some of the procedures or the functions described in the embodiments of this application are implemented. The computer may be a general-purpose computer, a special-purpose computer, a computer network, or another programmable apparatus. The computer instructions may be stored in a computer-readable storage medium, or may be transmitted by using a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

A sequence of the steps of the method embodiments of this application may be adjusted, combined, or deleted based on an actual requirement.

The modules in the apparatus embodiments of this application may be combined, divided, and deleted based on an actual requirement.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communications method, applied to a peripheral component interconnect express PCIe-based communications system, wherein the communications system comprises a first processor and a plurality of switches, the plurality of switches comprise a first switch and a second switch, a first link exists between the first processor and the first switch, a second link exists between the first switch and the second switch, and a first standby link is configured between the first processor and the second switch; and
the method comprises:
if the first link and the second link are not faulty, communicating, by the first processor, with the second switch through the first link and the second link; or
if the first link or the second link is faulty, activating the first standby link, and communicating, by the first processor, with the second switch through the activated first standby link.

2. The method according to claim 1, wherein the communications system further comprises a third switch, and that a first standby link is configured between the first processor and the second switch is specifically:
a third link exists between the first processor and the third switch, and a second standby link is configured between the third switch and the second switch; and
the communicating, by the first processor, with the second switch through the activated first standby link comprises:
communicating, by the first processor, with the second switch through the third link and the activated second standby link.

3. The method according to claim 2, wherein the method further comprises:
sending, by the first processor, first activation indication information to the third switch, wherein the first activation indication information is used by the third switch to activate the second standby link; and/or
receiving, by the third switch, the first activation indication information from the first processor; and
activating, by the third switch, the second standby link according to the first activation indication information.

4. The method according to claim 2, wherein the activating the first standby link comprises:
sending, by the second switch, second activation indication information to the third switch, wherein the second activation indication information is used by the third switch to activate the second standby link;
receiving, by the third switch, first activation indication information from the first processor; and
activating, by the third switch, the second standby link according to the second activation indication information.

5. The method according to any one of claims 1 to 4, wherein before the activating the first standby link, the method further comprises:
determining the first standby link based on information about the first standby link, wherein the information about the first standby link comprises at least one of a priority of the first standby link, a latency of the first standby link, and a hop count from the second switch to the first processor through the first standby link.

6. The method according to claim 5, wherein the first standby link is a link with a highest priority, a link with a shortest latency, or a link with a smallest hop count from the second switch to the first processor.

7. The method according to any one of claims 2 to 6, wherein the communications system further comprises a second processor, a fourth link exists between the second processor and the second switch, a fifth link exists between the second processor and the third switch, and the method further comprises:
if the fourth link is not faulty, communicating, by the second processor, with the second switch through the fourth link; or
if the fourth link is faulty, communicating, by the second processor, with the second switch through the fifth link and the activated second standby link.

8. The method according to claim 7, wherein the communications system comprises a first control domain and a second control domain; the first control domain comprises the first processor, the first switch, the second switch, and the third switch; the second control domain comprises the second processor; a first non-transparent bridge link is configured between the first control domain and the second control domain; and the first non-transparent bridge link is used by the second processor to access the first control domain.

9. The method according to claim 8, wherein the method further comprises:
allocating, by the first processor, at least one of a bus number, a device number, and a function number to the second switch; and/or
a first address mapping relationship exists between the second processor and the first non-transparent bridge link, wherein the first address mapping relationship is used by the second processor to communicate with the second switch.

10. The method according to claim 7, wherein the communications system comprises a first control domain and a second control domain; the first control domain comprises the first processor, the first switch, and the second switch; the second control domain comprises the second processor and the third switch; and a second non-transparent bridge link is configured between the first control domain and the second control domain.

11. The method according to claim 10, wherein the method further comprises:
a second address mapping relationship exists between the first processor and the second non-transparent bridge link, wherein the second address mapping relationship is used by the first processor to communicate with the second switch; and/or
allocating, by the second processor, at least one of a bus number, a device number, and a function number to the second switch.

12. The method according to any one of claims 2 to 10, wherein the third switch is a switch that is in the plurality of switches and that is separated from the second switch by a hop count greater than or equal to a first threshold, or is a switch that is in the plurality of switches and that is separated from the first processor by a hop count greater than or equal to a second threshold.

13. A communications method, applied to a peripheral component interconnect express PCIe-based communications system, wherein the communications system comprises a first processor and a plurality of switches, the plurality of switches comprise a first switch and a second switch, a first link exists between the first processor and the first switch, a second link exists between the second switch and the first switch, and a first standby link is configured between the second switch and the first processor; and
the method comprises:
if the first link and the second link are not faulty, communicating, by the second switch, with the first processor through the first link and the second link; or
if the first link or the second link is faulty, activating, by the second switch, the first standby link, and communicating, by the second switch, with the first processor through the activated first standby link.

14. The method according to claim 13, wherein the communications system further comprises a third switch, and that a first standby link is configured between the first processor and the second switch is specifically:
a third link exists between the first processor and the third switch, and a second standby link is configured between the second switch and the third switch; and
the communicating, by the second switch, with the first processor through the activated first standby link comprises:
communicating, by the second switch, with the first processor through the third link and the activated second standby link.

15. The method according to claim 14, wherein the activating, by the second switch, the first standby link comprises:
sending, by the second switch, second activation indication information to the third switch, wherein the second activation indication information is used by the third switch to activate the second standby link.

16. The method according to any one of claims 13 to 15, wherein before the activating, by the second switch, the first standby link, the method further comprises:
determining, by the second switch, the first standby link based on information about the first standby link, wherein the information about the first standby link comprises at least one of a priority of the first standby link, a latency of the first standby link, and a hop count from the second switch to the first processor through the first standby link.

17. The method according to claim 16, wherein the first standby link is a link with a highest priority, a link with a shortest latency, or a link with a smallest hop count from the second switch to the first processor.

18. The method according to any one of claims 14 to 17, wherein the communications system further comprises a second processor, a fourth link exists between the second switch and the second processor, a fifth link exists between the second processor and the third switch, and the method further comprises:
if the fourth link is not faulty, communicating, by the second switch, with the second processor through the fourth link; or
if the fourth link is faulty, communicating, by the second switch, with the second processor through the fifth link and the activated second standby link.

19. The method according to claim 18, wherein the communications system comprises a first control domain and a second control domain; the first control domain comprises the first processor, the first switch, the second switch, and the third switch; the second control domain comprises the second processor; a first non-transparent bridge link is configured between the first control domain and the second control domain; and the first non-transparent bridge link is used by the second processor to access the first control domain.

20. The method according to claim 19, wherein the method further comprises:
receiving, by the second switch, at least one of a bus number, a device number, and a function number from the first processor.

21. The method according to claim 18, wherein the communications system comprises a first control domain and a second control domain; the first control domain comprises the first processor, the first switch, and the second switch; the second control domain comprises the second processor and the third switch; a second non-transparent bridge link is configured between the first control domain and the second control domain; and the second non-transparent bridge link is used by the first processor to access the second control domain.

22. The method according to any one of claims 14 to 21, wherein the method further comprises:
receiving, by the second switch, at least one of a bus number, a device number, and a function number from the second processor.

23. A communications apparatus, wherein the apparatus is a processor in a peripheral component interconnect express PCIe-based communications system, the communications system further comprises a plurality of switches, the plurality of switches comprise a first switch and a second switch, a first link exists between the first processor and the first switch, a second link exists between the first switch and the second switch, a first standby link is configured between the apparatus and the second switch, and the apparatus comprises:
a first communications unit, configured to: if the first link and the second link are not faulty, communicate with the second switch through the first link and the second link; and
a second communications unit, configured to: if the first link or the second link is faulty, activate the first standby link, and communicate with the second switch through the activated first standby link.

24. The apparatus according to claim 23, wherein the communications system further comprises a third switch, and that a first standby link is configured between the apparatus and the second switch is specifically:
a third link exists between the apparatus and the third switch, and a second standby link is configured between the third switch and the second switch; and
the second communications unit is specifically configured to:
communicate with the second switch through the third link and the activated second standby link.

25. The apparatus according to claim 24, wherein the second communications unit is specifically configured to:
send first activation indication information to the third switch, wherein the first activation indication information is used by the third switch to activate the second standby link.

26. The apparatus according to claim 24 or 25, wherein the apparatus further comprises:
a determining unit, configured to determine the first standby link based on information about the first standby link, wherein the information about the first standby link comprises at least one of a priority of the first standby link, a latency of the first standby link, and a hop count from the second switch to the apparatus through the first standby link.

27. The apparatus according to claim 26, wherein the first standby link is a link with a highest priority, a link with a shortest latency, or a link with a smallest hop count from the second switch to the apparatus.

28. The apparatus according to any one of claims 23 to 27, wherein the apparatus further comprises:
an allocation unit, configured to allocate at least one of a bus number, a device number, and a function number to the second switch.

29. A communications apparatus, wherein the apparatus is a switch in a peripheral component interconnect express PCIe-based communications system, the communications system further comprises a first processor and a first switch, a first link exists between the first processor and the first switch, a second link exists between the apparatus and the first switch, a first standby link is configured between the apparatus and the first processor, and the apparatus comprises:
a first communications unit, configured to: if the first link and the second link are not faulty, communicate with the first processor through the first link and the second link; and
a second communications unit, configured to: if the first link or the second link is faulty, activate the first standby link, and communicate with the first processor through the activated first standby link.

30. The apparatus according to claim 29, wherein the communications system further comprises a third switch, and that a first standby link is configured between the apparatus and the first processor is specifically:
a third link exists between the first processor and the third switch, and a second standby link is configured between the apparatus and the third switch; and
the second communications unit is specifically configured to:
communicate with the first processor through the third link and the activated second standby link.

31. The apparatus according to claim 30, wherein the second communications unit is specifically configured to:
send second activation indication information to the third switch, wherein the second activation indication information is used by the third switch to activate the first standby link.

32. The apparatus according to any one of claims 29 to 31, wherein the apparatus further comprises:
a determining unit, configured to determine the first standby link based on information about the first standby link, wherein the information about the first standby link comprises at least one of a priority of the first standby link, a latency of the first standby link, and a hop count from the second switch to the first processor through the first standby link.

33. The apparatus according to any one of claims 29 to 32, wherein the first standby link is a link with a highest priority, a link with a shortest latency, or a link with a smallest hop count from the second switch to the first processor.

34. The apparatus according to any one of claims 30 to 33, wherein the communications system further comprises a second processor, a fourth link exists between the apparatus and the second processor, and a fifth link exists between the second processor and the third switch;
the first communications unit is further configured to: if the fourth link is not faulty, communicate with the second processor through the fourth link; and
the second communications unit is further configured to: if the fourth link is faulty, communicate with the second processor through the fifth link and the activated second standby link.

35. The apparatus according to claim 34, wherein the communications system comprises a first control domain and a second control domain; the first control domain comprises the apparatus, the first processor, the first switch, and the third switch; the second control domain comprises the second processor; a first non-transparent bridge link is configured between the first control domain and the second control domain; and the first non-transparent bridge link is used by the second processor to access the first control domain.

36. The apparatus according to claim 35, wherein the second communications unit is further configured to:
receive at least one of a bus number, a device number, and a function number from the first processor.

37. The apparatus according to claim 34, wherein the communications system comprises a first control domain and a second control domain; the first control domain comprises the apparatus, the first processor, the first switch, and the second switch; the second control domain comprises the second processor and the third switch; and a second non-transparent bridge link is configured between the first control domain and the second control domain.

38. The apparatus according to claim 37, wherein the second communications unit is further configured to:
receive at least one of a bus number, a device number, and a function number from the second processor.

39. A communications system, wherein the communications system is a peripheral component interconnect express PCIe-based system, the communications system comprises a first processor and a plurality of switches, the plurality of switches comprise a first switch and a second switch, a first link exists between the first processor and the first switch, a second link exists between the first switch and the second switch, and a first standby link is configured between the first processor and the second switch;
if the first link and the second link are not faulty, the first processor communicates with the second switch through the first link and the second link; or
if the first link or the second link is faulty, the first standby link is activated, and the first processor communicates with the second switch through the activated first standby link.

40. The communications system according to claim 39, wherein the communications system further comprises a third switch, and that a first standby link is configured between the first processor and the second switch is specifically:
a third link exists between the first processor and the third switch, and a second standby link is configured between the third switch and the second switch; and
that the first processor communicates with the second switch through the activated first standby link is specifically:
the first processor communicates with the second switch through the third link and the activated second standby link.

41. The communications system according to claim 40, wherein the activating the first standby link is specifically:
the first processor sends first activation indication information to the third switch, wherein the first activation indication information is used by the third switch to activate the second standby link; and/or
the third switch receives the first activation indication information from the first processor; and
the third switch activates the second standby link according to the first activation indication information.

42. The communications system according to claim 40, wherein that the first standby link is activated is specifically:
the second switch sends second activation indication information to the third switch, wherein the second activation indication information is used by the third switch to activate the second standby link;
the third switch receives first activation indication information from the first processor; and
the third switch activates the second standby link according to the second activation indication information.

43. The communications system according to any one of claims 39 to 42, wherein before the first standby link is activated,
the first standby link is determined based on information about the first standby link, wherein the information about the first standby link comprises at least one of a priority of the first standby link, a latency of the first standby link, and a hop count from the second switch to the first processor through the first standby link.

44. The communications system according to claim 43, wherein the first standby link is a link with a highest priority, a link with a shortest latency, or a link with a smallest hop count from the second switch to the first processor.

45. The communications system according to any one of claims 40 to 44, wherein the communications system further comprises a second processor, a fourth link exists between the second processor and the second switch, and a fifth link exists between the second processor and the third switch;
if the fourth link is not faulty, the second processor communicates with the second switch through the fourth link; or
if the fourth link is faulty, the second processor communicates with the second switch through the fifth link and the activated second standby link.

46. The communications system according to claim 44, wherein the communications system comprises a first control domain and a second control domain; the first control domain comprises the first processor, the first switch, the second switch, and the third switch; the second control domain comprises the second processor; a first non-transparent bridge link is configured between the first control domain and the second control domain; and the first non-transparent bridge link is used by the second processor to access the first control domain.

47. The communications system according to claim 46, wherein before the first processor communicates with the second switch through the activated first standby link,
the first processor allocates at least one of a bus number, a device number, and a function number to the second switch; and/or
a first address mapping relationship exists between the second processor and the first non-transparent bridge link, wherein the first address mapping relationship is used by the second processor to communicate with the second switch.

48. The communications system according to claim 44, wherein the communications system comprises a first control domain and a second control domain; the first control domain comprises the first processor, the first switch, and the second switch; the second control domain comprises the second processor and the third switch; and a second non-transparent bridge link is configured between the first control domain and the second control domain.

49. The communications system according to claim 48, wherein before the first processor communicates with the second switch through the activated first standby link,
a second address mapping relationship exists between the first processor and the second non-transparent bridge link, wherein the second address mapping relationship is used by the first processor to communicate with the second switch; and/or
the second processor allocates at least one of a bus number, a device number, and a function number to the second switch.

50. The communications system according to any one of claims 40 to 49, wherein the third switch is a switch that is in the plurality of switches and that is separated from the second switch by a hop count greater than or equal to a first threshold, or is a switch that is in the plurality of switches and that is separated from the first processor by a hop count greater than or equal to a second threshold.

51. A vehicle, wherein the vehicle comprises a peripheral component interconnect express PCIe-based communications system, and the communications system is the communications system according to any one of claims 39 to 50.
